# FASCICULE DE BREVET EUROPEEN

(11) **EP 3 520 124 B1**
(45) Date de publication et mention de la délivrance du brevet: **13.04.2022**
(21) Numéro de dépôt: 16785559.2
(22) Date de dépôt: 30.09.2016
(51) Int. Cl.: H01F 3/02, H01F 1/147, H01F 1/16, H01F 3/14, H01F 27/245, H01F 27/26

(54) **NOYAU DE TRANSFORMATEUR DU TYPE DÉCOUPÉ-EMPILÉ, ET TRANSFORMATEUR LE COMPORTANT**
TRANSFORMATORKERN MIT SCHNEIDEN-UND-STAPELN-TRANSFORMATOR SOWIE TRANSFORMATOR DAMIT
TRANSFORMER CORE FOR A CUT-AND-STACK TYPE TRANSFORMER, AND TRANSFORMER INCLUDING SAME

(43) Date de publication de la demande: 07.08.2019
(73) Titulaire: Aperam, 1882 Luxembourg (LU)
(72) Inventeur: WAECKERLE, Thierry, 58000 Nevers (FR); HUBERT, Olivier, 60600 Agnetz (FR)
(74) Mandataire: Lavoix
(86) Numéro de dépôt international: PCT/IB2016/001409
(87) Numéro de publication internationale: WO 2018/109509

(56) Documents cités:
- WO-A1-2016/083866
- US-A- 2 112 084
- US-A- 2 569 468
- US-A- 3 297 434
- US-A- 4 290 827
- US-A1- 2004 212 269

## Description

L'invention concerne le domaine des transformateurs électriques susceptibles d'être embarqués à bord d'aéronefs. Leur fonction est l'isolation galvanique entre le réseau-source et les systèmes électriques et électroniques embarqués, ainsi que la transformation de tension entre le circuit primaire (côté réseau d'alimentation par la/les génératrice(s) de bord) et un ou plusieurs circuits secondaires. De plus ces transformateurs peuvent être « redresseurs » par une fonctionnalité avale à base de composants électroniques, afin de délivrer une tension constante à certains appareils de bord.

Les transformateurs embarqués basse fréquence (≤ 1 kHz) sont constitués principalement d'un noyau magnétique en alliage magnétique doux, feuilleté, empilé ou enroulé suivant les contraintes de construction, et d'enroulements primaire et secondaire(s) en cuivre. Les courants primaires d'alimentation sont variables dans le temps, périodiques mais pas nécessairement de forme purement sinusoïdale, ce qui ne change pas fondamentalement les besoins du transformateur.

WO 2016/083866 A1 divulgue un noyau à enroulements Fe-Ni superposés avec deux entrefers.

US 2004/212269 A1 divulgue un noyau empilé du type découpé-empilé.

Les contraintes pesant sur ces transformateurs sont multiples.

Ils doivent avoir un volume et/ou une masse (en général les deux sont très liés) les plus réduits possibles, donc une densité de puissance volumique ou massique aussi élevée que possible. Plus la fréquence de fonctionnement est basse, plus la section de la culasse magnétique et le volume (donc aussi la masse) de cette culasse sont importants, ce qui exacerbe l'intérêt de la miniaturiser dans les applications basse fréquence. Comme la fréquence fondamentale est très souvent imposée, cela revient à obtenir un flux magnétique de travail le plus élevé possible ou bien, si la puissance électrique délivrée est imposée, à réduire au maximum la section de passage du flux magnétique (et donc la masse des matériaux), toujours pour accroître la puissance massique par réduction des masses embarquées.

Ils doivent avoir une longévité suffisante (10 à 20 ans au minimum suivant les applications) pour permettre de les rentabiliser. De ce fait, le régime thermique de fonctionnement doit être bien pris en compte vis à vis du vieillissement du transformateur. Typiquement une durée de vie minimale de 100 000 h à 200°C est souhaitée.

Le transformateur doit fonctionner sur un réseau d'alimentation à fréquence grossièrement sinusoïdale, avec une amplitude de la tension efficace de sortie pouvant varier de façon transitoire jusqu'à 60% d'un moment à l'autre, et en particulier lors de la mise sous tension du transformateur ou lors de l'enclenchement brutal d'un actionneur électromagnétique. Cela a pour conséquence, et par construction, un appel de courant au primaire du transformateur au travers de la courbe d'aimantation non linéaire du noyau magnétique. Les éléments du transformateur (isolants et composants électroniques) doivent pouvoir supporter sans dommages de fortes variations de ce courant d'appel, ce que l'on nomme « effet d'inrush ».

Cet effet d'inrush peut être quantifié par un « indice d'inrush » In qui est calculé par la formule In = 2.Bₜ + Bᵣ - Bₛₐₜ, où Bₜ est l'induction nominale de travail du noyau magnétique du transformateur, Bₛₐₜ est l'induction à saturation du noyau et Bᵣ est son induction rémanente.

Il est important de préciser que l'Inrush traduit la possibilité que le transformateur subisse brusquement (par exemple lors de la mise en route du transformateur, alors que le système de bord génère déjà sa puissance électrique) un appel violent de tension électrique correspondant à la variation de flux magnétique nominale dΦ/dt pour lequel il est conçu. Si à cet instant le flux magnétique dans le transformateur est initialement Φ₀, alors le flux magnétique se trouve brutalement porté à Φ₀ + dΦ. Si Φ₀ est proche de 0, alors Φ₀+dΦ est proche de dΦ, qui peut être proche d'un flux saturant si le transformateur a été dimensionné ainsi. Mais si Φ₀ est élevé, par exemple proche du coude de la courbe B(H), alors l'ajout d'un flux dΦ va l'amener à une valeur Φ₀+dΦ très élevée, donc à une induction magnétique hypersaturante pour arriver à générer ce flux supplémentaire dΦ. Pour cela le transformateur fera donc appel à un champ magnétique appliqué hypersaturant, et à un courant correspondant au primaire du transformateur qui va provoquer une brutale montée de courant dans l'électronique d'alimentation de bord, pouvant causer de grands dommages.

Aussi afin d'éviter de se retrouver dans une telle situation de Φ₀+dΦ hypersaturant, et comme il est impossible de prévoir si Φ₀ sera faible ou élevé au moment du raccordement du transformateur, les gens du métier des transformateurs utilisent en particulier les règles suivantes, intégrées à la formule d'inrush ci-dessus :
Une première règle consiste à accroître l'induction à saturation du matériau pour accepter le maximum de flux magnétique lors du raccordement électrique du transformateur ;
Une deuxième règle consiste à réduire l'induction rémanente Bᵣ pour réduire Φ₀.

On entend par induction rémanente Bᵣ, ici comme dans toute la suite du texte, le point d'induction où le champ magnétique s'annule sur le cycle d'hystérésis majeur,. En effet, comme on ne connait pas a priori (et c'est le cas général d'un fonctionnement de transformateur embarqué) l'histoire magnétique du transformateur, il est impossible de savoir si le transformateur - qu'il soit au repos ou qu'il soit dans l'état électrique où il se trouve avant son raccordement au réseau électrique embarqué - a parcouru précédemment un cycle d'hystérésis majeur (auquel cas il se trouvera au repos à l'induction Bᵣ maximale, qu'on nomme simplement Bᵣ) sous l'effet d'une pointe transitoire de courant, ou s'il a parcouru un cycle d'hystérésis mineur (c'est à dire intérieur au cycle majeur par le fait que le noyau magnétique n'a pas été amené à une induction à saturation par le champ maximum appliqué. Devant cette inconnue, on ne peut considérer par précaution que l'induction Bᵣ du cycle d'hystérésis majeur comme grandeur caractéristique vis à vis du phénomène d'inrush.

On rappelle qu'en magnétisme, les cycles d'hystérésis « majeurs » et « mineurs » sont classiquement définis de la façon suivante.

Un cycle d'hystérésis, en aimantation M sous un champ appliqué variable H, est la figure fermée M(H) obtenue en faisant varier H entre 2 valeurs Hmin et Hmax jusqu'à ce que les aimantations correspondantes M(Hmin) et M(Hmax) soient stabilisées ; alors la boucle M(H) est fermée. L'hystérésis se caractérise par le fait que l'aimantation M est différente - en tout ou partie - entre le trajet aller (Hmin-->Hmax) appelé "courbe d'hystérésis ascendante" et le trajet retour (Hmax-->Hmin) appelé "courbe d'hystérésis descendante". On s'aperçoit que l'hystérésis forme ainsi une boucle avec ses deux parties ascendante et descendante, et que ces deux parties se rejoignent pour deux champs de "fermeture" du cyle Hferm1 et Hferm2.

En augmentant les champs extrêmes appliqués Hmin et Hmax, on s'aperçoit que le cycle d'hystérésis finit par se rétrécir pour former aux plus hauts champs magnétiques une seule courbe d'aimantation : le champ auquel on passe de deux à une courbe est le champ dit "de fermeture" Hferm1 ou Hferm2.

Si Hmax > Hferm2 et Hmin <Hferm1 (donc si le cycle d'hystérésis de transforme à ses deux extrémités pour les plus hauts champs appliqués en une unique courbe d'aimantation) alors le cycle d'hystérésis est dit « majeur ». Sinon il est dit « mineur ».

Une troisième règle consiste à réduire l'induction nominale de travail Bₜ, ce qui revient à faire décrire au noyau magnétique du transformateur un cycle d'hystérésis mineur dont la valeur maximale est par définition Bₜ.

Afin de limiter l'effet d'inrush, la méthode la plus employée et la plus sûre est, pour les utilisations les plus habituelles des transformateurs basse fréquence, de réduire Bₜ (voir la formule ci-dessus), afin de réduire l'accroissement de flux dΦ (qui vaut 2.Bₜ.section du noyau) que devra encaisser transitoirement le transformateur, lors de son raccordement électrique par exemple.

En revanche réduire Bₜ revient aussi à réduire la capacité de transformation électrique de tension du transformateur en régime permanent (tâche principale du transformateur), ce que l'on devra compenser en augmentant la section de culasse magnétique (tension = dΦ/dt= d(N.Bₜ.S)/dt avec N = nombre de spires au secondaire), donc en l'alourdissant, ce qui n'est pas une solution satisfaisante sur un transformateur embarqué. Dans ce cas, on préférera donc toujours, pour limiter l'inrush, des solutions fondées sur un choix de matériaux magnétiques permettant d'accroitre Bₛ et réduire Bᵣ, afin de limiter la baisse de Bₜ.

Le bruit émis par le transformateur dû aux forces électromagnétiques et à la magnétostriction doit être suffisamment bas pour être conforme aux normes en vigueur ou pour satisfaire les exigences des utilisateurs et du personnel posté à proximité du transformateur. De plus en plus, les pilotes et copilotes d'aéronefs souhaitent pouvoir communiquer non plus à l'aide de casques mais par voie directe.

Le rendement thermique du transformateur est également très important à considérer, puisqu'il fixe à la fois sa température de fonctionnement interne et les flux de chaleur qui doivent être évacués, par exemple au moyen d'un bain d'huile entourant les enroulements et la culasse, associé à des pompes à huile dimensionnées en conséquence. Les sources de puissance thermique sont principalement les pertes par effet Joule issues des enroulements primaire et secondaires, et les pertes magnétiques issues des variations du flux magnétique dans le temps et dans le matériau magnétique. Dans la pratique industrielle, la puissance thermique volumique à extraire est limitée à un certain seuil imposé par la taille et la puissance des pompes à huile, et la température limite de fonctionnement interne du transformateur.

Enfin, le coût du transformateur doit être maintenu aussi bas que possible afin d'assurer le meilleur compromis technico-économique entre coût des matériaux, de conception, de fabrication et d'entretien, et optimisation de la densité de puissance électrique (massique ou volumique) du dispositif au travers de la prise en compte du régime thermique du transformateur.

De manière générale, on a intérêt à rechercher la densité de puissance massique/volumique la plus élevée possible. Les critères à prendre en considération pour l'apprécier sont principalement l'aimantation à saturation Js et l'induction magnétique à 800 A/m B₈₀₀ pour des matériaux à perméabilité moyennement élevée comme le fer, les alliages fer-silicium, fer-cobalt, ou l'induction magnétique à 80A/m B₈₀ pour des matériaux magnétiques à perméabilité élevée comme les alliages Fe-Ni.

On utilise actuellement deux technologies de fabrication des transformateurs embarqués basse fréquence.

Selon une première de ces technologies, le transformateur comporte un circuit magnétique enroulé lorsque l'alimentation est monophasée. Lorsque l'alimentation est triphasée, la structure du noyau du transformateur est réalisée par deux noyaux toriques du type précédent accolés, et entourés par un troisième tore enroulé et formant un «huit» autour des deux noyaux toriques précédents. Cette forme de circuit impose en pratique une épaisseur faible de la tôle magnétique (typiquement 0,1mm). De fait, cette technologie est utilisée seulement lorsque la fréquence d'alimentation contraint, compte tenu des courants induits, à utiliser des bandes de cette épaisseur, c'est à dire typiquement pour des fréquences de quelques centaines de Hz.

Selon la seconde de ces technologies, on utilise un circuit magnétique empilé, quelles que soient les épaisseurs de tôles magnétiques envisagées. Cette technologie est donc valable pour toute fréquence inférieure à quelques kHz. Cependant un soin particulier doit être apporté à l'ébavurage, à la juxtaposition, voire à l'isolation électrique des tôles, afin de réduire à la fois les entrefers parasites (et donc optimiser la puissance apparente) et limiter les courants induits entre tôles.

Dans l'une ou l'autre de ces technologies, on utilise dans les transformateurs de puissance embarqués, et quelle que soit l'épaisseur de bande envisagée, un matériau magnétique doux à haute perméabilité. Deux familles de ces matériaux existent dans des épaisseurs de 0,35 mm à 0,1 voire 0,05 mm, et se distinguent clairement par leurs compositions chimiques :
- les alliages Fe-3% Si (les compositions des alliages sont, dans tout le texte données en % pondéraux, à l'exception de celle des alliages nanocristallins dont il sera question par la suite), dont la fragilité et la résistivité électrique sont principalement contrôlées par la teneur en Si ; leurs pertes magnétiques sont assez faibles (alliages à grains non orientés N.O.) à faibles (alliages à grains orientés G.O.), leur aimantation à saturation Js est élevée (de l'ordre de 2T), leur coût est très modéré ; il existe deux sous familles de Fe-3% Si utilisées soit pour une technologie de noyau de transformateur embarqué, soit pour une autre :
   ∘ les Fe-3%Si à Grains Orientés (G.O.),utilisés pour les structures de transformateur embarqué de type « enroulé » : leur perméabilité élevée (B₈₀₀ = 1.8 - 1.9 T) est liée à leur texture {110} <001> très prononcée ; ces alliages ont l'avantage d'être peu coûteux, faciles à mettre en forme, de grande perméabilité, mais leur saturation est limitée à 2 T, et ils présentent une non-linéarité très marquée de la courbe d'aimantation qui peut provoquer des harmoniques très importantes ;
   ∘ les Fe-3%Si à grains Non Orientés (N.O.), utilisés pour les structures de transformateur embarqué de type « découpé-empilé » ; leur perméabilité est plus réduite, leur aimantation à saturation est similaire à celle des G.O ;
- les alliages Fe-48% Co-2% V, dont la fragilité et la résistivité électrique sont principalement contrôlées par le vanadium ; ils doivent leurs perméabilités magnétiques élevées non seulement à leurs caractéristiques physiques (K1 faible) mais aussi au refroidissement après recuit final qui règle K1 à une valeur très basse ; du fait de leur fragilité, ces alliages doivent être mis en forme à l'état écroui (par découpe, estampage, pliage...), et une fois seulement que la pièce possède sa forme finale (rotor ou stator de machine tournante, profilé en E ou I de transformateur) le matériau est alors recuit en dernière étape ; de plus, à cause de la présence de V, la qualité de l'atmosphère de recuit doit être parfaitement contrôlée pour ne pas être oxydante ; enfin le prix de ce matériau, très élevé (20 à 50 fois celui du Fe-3% Si - G.O.), est lié à la présence de Co et est grossièrement proportionnel à la teneur en Co.

Seules ces deux familles de matériaux à haute perméabilité sont utilisées actuellement dans les transformateurs de puissance basse fréquence embarqués. Pourtant, il est connu depuis longtemps que les additions de Co dans le fer augmentent la saturation magnétique de l'alliage, jusqu'à atteindre 2,4 T vers 35 à 50 % de Co, et on aurait donc pu s'attendre à voir utiliser d'autres matériaux à base FeCo et contenant moins de cobalt que le Fe-48% Co-2% V dans les transformateurs embarqués.

Malheureusement, il s'avère que ces alliages intermédiaires ont une anisotropie magnétocristalline de plusieurs dizaines de kJ/m³, ce qui ne les autorise pas à avoir une perméabilité élevée dans le cas d'une distribution aléatoire des orientations cristallographiques finales. Dans le cas des tôles magnétiques à moins de 48% de Co pour transformateurs embarqués moyenne fréquence, on sait donc depuis longtemps que les chances de succès passent nécessairement par une texture aiguë caractérisée par le fait qu'en chaque grain, un axe <100> est très proche de la direction de laminage. La texture {110}<001> obtenue par Goss dans les Fe 3% Si par recristallisation secondaire en est un cas illustre. Cependant, selon ces travaux la tôle ne devait pas contenir de cobalt.

Plus récemment, on a montré dans le document US-A-3 881 967 qu'avec des additions de 4 à 6% de Co et 1 à 1,5% de Si, et en utilisant aussi une recristallisation secondaire, de hautes perméabilités pouvaient aussi être obtenues : B₈₀₀ ≈ 1,98 T, soit un gain de 0.02 T/% Co à 800 A/m par rapport aux meilleures tôles Fe 3% Si G.O. actuelles (B₈₀₀ ≈ 1,90 T). Il est cependant évident qu'une augmentation de seulement 4% du B₈₀₀ n'est pas suffisante pour alléger sensiblement un transformateur. A titre comparatif, un alliage Fe-48% Co-2% V optimisé pour transformateur présente un B₈₀₀ d'environ 2,15 T ± 0,05 T, ce qui permet un accroissement de flux magnétique, pour une même section de culasse, d'environ 13% ± 3 % à 800 A/m, d'environ 15 % à 2500 A/m, d'environ 16 % à 5000 A/m.

Il faut également signaler la présence dans les Fe 3% Si -G.O. de gros grains dus à la recristallisation secondaire, et d'une très faible désorientation entre cristaux autorisant un B₈₀₀ de 1,9 T, couplés à la présence d'un coefficient de magnétostriction λ₁₀₀ très nettement supérieur à 0. Cela rend ce matériau très sensible aux contraintes de montage et de fonctionnement, ce qui ramène dans la pratique industrielle le B₈₀₀ d'un Fe 3% Si G.O. en fonctionnement dans un transformateur embarqué à environ 1,8 T. C'est également le cas pour les alliages de US-A-3 881 967. Par ailleurs, le Fe-48% Co-2% V a des coefficients de magnétostriction d'amplitude encore 4 à 5 fois plus élevée que le Fe-3%Si, mais une distribution aléatoire des orientations cristallographiques et une petite taille moyenne des grains (quelques dizaines de microns), ce qui le rend beaucoup moins sensible aux faibles contraintes, et donc ne diminue pas significativement le B₈₀₀ en fonctionnement.

En fonctionnement, il faut donc considérer que le remplacement d'un Fe 3% Si G.O. par un Fe-48% Co-2% V amène un accroissement du flux magnétique à section constante du transformateur embarqué de l'ordre de 20 à 25 % pour des amplitudes de champ de fonctionnement de 800 à 5000 A/m, soit donc environ 0.5 % d'accroissement du flux magnétique par % Co. L'alliage de US-A-3 881 967 permet un accroissement de 1 % du flux magnétique par 1% de Co, mais comme on l'a dit, cet accroissement total (4 %) a été jugé beaucoup trop faible pour justifier le développement de ce matériau.

On a aussi proposé, notamment dans le document US-A-3 843 424 d'utiliser un alliage Fe-5 à 35% Co, comportant moins de 2% Cr et moins de 3% Si, et présentant une texture de Goss obtenue par recristallisation primaire et croissance normale de grain. Des compositions Fe-27% Co-0.6% Cr ou Fe-18% Co-0.6% Cr sont citées comme permettant d'atteindre 2.08 T à 800 A/m et 2.3 T à 8000 A/m. Ces valeurs permettraient en fonctionnement, par rapport à une tôle Fe-3% Si-G.O. fonctionnant à 1.8 T à 800 A/m, et à 1.95 T à 5000 A/m, d'augmenter le flux magnétique dans une section de culasse donnée de 15% à 800 A/m et de 18% à 5000 A/m, et donc de réduire d'autant le volume ou la masse du transformateur. Ainsi on a proposé plusieurs compositions et procédés de fabrication d'alliages Fe-bas Co (avec des additions éventuelles d'éléments d'alliage) permettant de façon générale d'obtenir des inductions magnétiques à 10 Oe proches de celles accessibles avec les alliages commerciaux Fe-48% Co-2% V mais avec des teneurs en Co (et donc des prix de revient) sensiblement moindres (18 à 25 %).

Dans la technologie de noyau découpé-empilé il n'est pas connu que les alliages Fe-Ni soient utilisés dans les transformateurs aéronautiques. En effet ces matériaux ont une aimantation à saturation notée Js (1,6 T au maximum pour le Fe-Ni50) bien plus faible que les Fe-Si (2 T) ou Fe-Co (> 2,3 T) ci-dessus, et par ailleurs présentent des coefficients de magnétostriction pour le FeNi50 de λ₁₁₁ = 7 ppm et λ₁₀₀ = 27 ppm. Il en résulte une magnétostriction apparente à saturation λₛₐₜ = 27 ppm pour un matériau polycristallin Fe-Ni50 de type « non orienté » (c'est-à-dire ne possédant pas de texture prononcée). Un tel niveau de magnétostriction est à l'origine d'un bruit élevé, ce qui explique, en plus d'une aimantation à saturation Js assez modérée, que ce matériau ne soit pas utilisé

En résumé, les différentes problématiques auxquelles les concepteurs de transformateurs aéronautiques sont confrontés peuvent se poser ainsi.

En l'absence d'exigence forte sur le bruit dû à la magnétostriction, le compromis entre les exigences sur un faible effet d'inrush, une forte densité massique du transformateur, un bon rendement et des pertes magnétiques faibles conduisent à utiliser des solutions mettant en jeu des noyaux magnétiques enroulés en Fe-Si G.O., en Fe-Co ou en amorphes à base fer, ou des solutions mettant en jeu des noyaux magnétiques en pièces découpées et empilées en Fe-Si N.O. ou en Fe-Co.

Dans ce dernier cas, on utilise fréquemment des noyaux découpés-empilés en E ou en I en acier électrique FeSi N.O. ou G.O., ou en alliages FeCo tels que Fe49Co49V2. Mais puisque ces matériaux ont une magnétostriction importante et que la direction d'aimantation ne demeure pas toujours selon la même direction cristallographique dans une structure en E, ces structures de transformateur se déforment beaucoup et émettent un bruit important si leur dimensionnement est réalisé avec un niveau d'induction de travail habituel (environ 70% de Js). Pour diminuer l'émission de bruit, il faut :
- soit réduire l'induction de travail, mais il faut alors augmenter dans le même rapport la section du noyau, donc son volume et sa masse pour conserver une même puissance transférée ;
- soit blinder acoustiquement le transformateur, d'où un surcoût et une augmentation de la masse et du volume du transformateur.

Dans ces conditions, il est loin d'être toujours possible de concevoir un transformateur répondant simultanément aux contraintes de poids et de bruit du cahier des charges.

Les exigences sur un faible bruit de magnétostriction étant de plus en plus répandues, il n'est pas possible de les satisfaire avec les technologies précédentes autrement qu'en augmentant le volume et la masse du transformateur, car on ne sait pas faire baisser le bruit autrement qu'en réduisant l'induction de travail moyenne Bₜ, donc en augmentant la section du noyau et la masse totale pour maintenir le même flux magnétique de travail. Il faut abaisser B₁ à environ 1 T, au lieu de 1,4 à 1,7 T pour les Fe-Si ou les Fe-Co en l'absence d'exigences sur le bruit. Il faut aussi, souvent, capitonner le transformateur, d'où une augmentation de son poids et de son encombrement.

Seul un matériau à magnétostriction nulle permettrait, à première vue, de résoudre le problème, et à condition d'avoir une induction de travail supérieure à celle des solutions actuelles. Seuls les alliages Fe-80% Ni qui présentent une induction à saturation Js de 0,75 T environ et les nanocrisatllins dont Js est de 1,26 T environ présentent une telle basse magnétostriction. Mais les alliages Fe-80%Ni ont une induction de travail Bₜ trop faible pour procurer des transformateurs plus légers que les transformateurs traditionnels. Seuls les nanocristallins permettraient cet allègement avec le faible bruit demandé.

Mais les nanocristallins posent un problème majeur dans le cas d'une solution « transformateur embarqué » : leur épaisseur est d'environ 20 µm et ils sont enroulés en tore à l'état souple amorphe autour d'un support rigide, afin que la forme du tore soit conservée pendant tout le traitement thermique aboutissant à la nanocristallisation. Et ce support ne peut être enlevé après le traitement thermique, toujours pour que la forme du tore puisse être conservée, et aussi parce que le tore est ensuite souvent coupé en deux pour permettre une meilleure compacité du transformateur en utilisant la technologie du circuit enroulé précédemment décrite. Seules des résines d'imprégnation du tore enroulé peuvent le maintenir dans la même forme en l'absence du support qui est retiré après polymérisation de la résine. Mais après une découpe en C du tore nanocristallin imprégné et durci, on constate une déformation du C qui empêche les deux parties d'être remises exactement face à face pour reconstituer le tore fermé, une fois les bobinages insérés. Les contraintes de fixation des C au sein du transformateur peuvent aussi conduire à leur déformation. Il est donc préférable de conserver le support, ce qui alourdit le transformateur. De plus les nanocristallins présentent une aimantation à saturation Js nettement plus basse que les autres matériaux doux (Fer, FeSi3%, Fe-Ni50%, FeCo, amorphe base fer), ce qui nécessite d'alourdir nettement le transformateur, puisque l'accroissement de section du noyau magnétique devra compenser la baisse d'induction de travail imposée par Js. Aussi la solution «nanocristallin» ne serait utilisée qu'en ultime recours, si le niveau de bruit maximum exigé est bas et si une autre solution plus légère et peu bruyante n'apparaissait pas.

Le but de l'invention est de proposer une conception de transformateur électrique basse fréquence, adapté à être utilisé dans des aéronefs, et permettant de résoudre au mieux les problèmes techniques dont on vient de parler, et de répondre à un cahier des charges impliquant :
- un indice d'inrush très bas, typiquement inférieur à 0,8, dont la valeur précise recherchée pourra dépendre du type d'alimentation du transformateur, du type de composant électrique ou électrique soumis à l'Inrush du transformateur ;
- un bruit en fonctionnement, hors des périodes où l'effet d'inrush se fait sentir, inférieur ou égal à 80 dB, de préférence inférieur ou égal à 55 dB pour que le transformateur puisse être placé dans le poste de pilotage ;
- et une masse totale de noyau magnétique la plus faible possible obtenue par une densité massique de puissance la plus grande possible, typiquement au moins égale à 1 kVA/kg et de préférence supérieure 1,25 kVA/kg voire même supérieure à 1,5 kVA/kg.

A cet effet, l'invention a pour objet un noyau de transformateur électrique, du type découpé-empilé, caractérisé en ce qu'il comporte deux empilements ou groupes d'empilements, présentant chacun une première épaisseur (ep1), lesdits empilements étant constitués chacun d'une pièce plate unique ou de plusieurs pièces plates identiques isolées les unes des autres, dont les directions principales de découpe sont rectilignes et sont soit parallèles, soit perpendiculaires les unes aux autres, lesdits empilements ou groupes d'empilements se faisant face et comportant au moins un entrefer (ε) résiduel ou calibré de valeur maximale 10 mm entre eux, lesdites pièces plates étant en au moins un alliage FeNi austénitique contenant Ni = 30-80%, de préférence Ni = 40-60%, et au plus 10%, de préférence au plus 2%, d'éléments d'alliage et d'impuretés résultant de l'élaboration, le reste étant du fer, ledit alliage ayant une texture cube {100}<001> aiguë, dont au moins 80% des grains, de préférence au moins 95% des grains, s'écartent d'un angle (ω) égal à au plus 20° par rapport à l'orientation idéale {100}<001>, les deux directions principales de découpe desdites pièces plates étant sensiblement parallèles soit à la direction de laminage, soit à la direction travers perpendiculaire à la direction de laminage, le plan cristallographique (100) s'écartant d'au plus 20° par rapport au plan de laminage, de préférence au plus de 10°, mieux au plus de 5°, et les axes [001] ou [010] et respectivement la direction de laminage ou la direction travers s'écartant d'un angle (α) au plus égal à 20°, de préférence au plus égal à 10°, mieux au plus égal à 5°, lesdites pièces plates ayant des pertes magnétiques en ondes d'induction sinusoïdales issues du noyau magnétique, pour une induction maximale de 1 T, inférieures à 20 W/kg à 400 Hz, de préférence inférieures à 15 W/kg, et mieux, inférieures à 10 W/kg, la magnétostriction apparente pour une induction maximale de 1,2 T étant inférieure à 5 ppm, de préférence inférieure à 3 ppm, de préférence à 1 ppm, lorsque la mesure est réalisée sur un échantillon rectangulaire allongé, le champ étant appliqué selon la direction du grand côté de l'échantillon et cette direction étant parallèle à la direction de laminage, la magnétostriction apparente pour une induction maximale de 1,2 T étant inférieure à 5 ppm, de préférence inférieure à 3 ppm, de préférence à 1 ppm, lorsque la mesure est réalisée sur un échantillon rectangulaire allongé, le champ étant appliqué selon la direction du grand côté de l'échantillon et cette direction étant parallèle à la direction travers perpendiculaire à la direction de laminage et située dans le plan de laminage, et la magnétostriction apparente pour une induction maximale de 1,2 T étant inférieure à 10 ppm, de préférence inférieure à 8 ppm, de préférence à 6 ppm, lorsque la mesure est réalisée sur un échantillon rectangulaire allongé, le champ étant appliqué selon la direction long de l'échantillon et cette direction étant parallèle à la direction intermédiaire à 45° de la direction de laminage et de la direction travers.

Lesdits empilements peuvent être chacun en forme de C, de E ou de I.

Le noyau peut alors être formé par deux sous-noyaux en forme de E se faisant face.

Le noyau peut alors aussi être formé par un empilement de pièces plates en forme de E placées tête-bêche, les espaces vides entre les branches latérales desdites pièces plates en forme de E étant remplis par des pièces plates en forme de I de mêmes composition et texture que celles des pièces plates en forme de E, des entrefers (ε) étant présents entre lesdites pièces plates en forme de E et lesdites pièces plates en forme de I.

Le noyau peut alors aussi être formé par un sous-noyau en forme de E et un sous-noyau en forme de I se faisant face.

Le noyau peut alors aussi être formé par deux sous-noyaux en forme de C se faisant face.

Le noyau peut alors aussi être formé par deux ensembles accolés de deux sous-noyaux en forme de C, lesdits ensembles se faisant face.

En variante, le noyau peut être formé par une succession de couches d'empilements, deux couches successives étant placées tête-bêche et séparées par un entrefer (δ2).

Au moins un desdits empilements peut être constitué de plusieurs pièces plates de formes identiques séparées chacune par un entrefer (δ1).

Lesdits éléments d'alliage peuvent être choisis parmi l'un au moins parmi Cr, Si, Al, Zr, Mo, W, V, Nb, Cu, Mn.

Lesdites pièces plates découpées peuvent présenter une symétrie.

La taille des grains desdites pièces peut être inférieure ou égale à 200 µm.

Le noyau de transformateur peut comporter également des deuxièmes empilements de pièces plates, présentant une deuxième épaisseur (ep2), de même forme que les empilements présentant une première épaisseur (ep1) et superposés à eux, lesdites pièces plates des deuxièmes empilements étant en au moins un matériau présentant une aimantation à saturation supérieure ou égale à 2 T, lesdits deuxièmes empilements représentant moins de 50% du volume du noyau.

Lesdites pièces plates des deuxièmes empilements peuvent être réalisées en au moins un matériau choisi parmi des alliages FeCo, des alliages FeCo(V, Ta, Cr, Si, X) avec X choisi parmi un ou davantage de Mo, Mn, Nb, Si, Al, des alliages FeCoSi, le fer doux, des aciers, des aciers inoxydables ferritiques contenant 5-22% de Cr et 0 à 10% au total de Mo, Mn, Nb, Si, Al, V, des aciers électriques FeSiAl non orientés.

L'entrefer (ε) entre deux empilements ou groupes d'empilements se faisant face peut présenter une largeur différente entre les premiers empilements présentant une première épaisseur (ep1) et entre les deuxièmes empilements présentant une deuxième épaisseur (ep2).

Ledit entrefer (ε) peut avoir une largeur (ε1) comprise entre 2 et 1500 µm entre lesdits empilements présentant une première épaisseur (ep1) et une largeur (ε2) comprise entre 2 et 3000 µm entre lesdits empilements présentant une deuxième épaisseur (ep2).

L'invention a également pour objet un transformateur électrique monophasé ou triphasé comportant un noyau magnétique de type découpé-empilé, caractérisé en ce que ledit noyau magnétique est du type précédent.

Il peut s'agir d'un transformateur destiné à être embarqué dans un aéronef.

Il peut s'agir d'un transformateur destiné à être placé dans le poste de pilotage d'un aéronef.

Comme on l'aura compris, l'invention consiste à adopter une technologie de transformateur le plus typiquement « à noyau découpé-empilé utilisant des feuilles superposées de matériau magnétique en E, en I ou en C », le plus souvent disposées pour former des empilements, c'est-à-dire des groupes de feuilles sensiblement identiques à la fois en forme, en dimensions, en composition chimique et en texture (lorsque celle-ci, pour une feuille d'un empilement donné, est importante pour les propriétés du noyau que l'on veut obtenir), superposées, et à lui associer les caractéristiques suivantes :
- une forte densité de puissance volumique et/ou massique à une fréquence de 400Hz en ondes d'induction sinusoïdales, typiquement au moins égale à 1,5 kVA/kg et de préférence supérieure ou égale à 3 kVA/kg voire même supérieure ou égale à 4 kVA/kg ;
- de faibles pertes magnétiques à 400Hz en ondes d'induction sinusoïdales issues du noyau magnétique, à savoir inférieures à 20 W/kg, de préférence inférieures à 15 W/kg et de préférence inférieures à 10 W/kg, pour une induction maximale de 1T ;
- une magnétostriction apparente à induction maximale de 1,2 T λₛ^{1,2T} inférieure ou égale à 5 ppm, de préférence inférieure ou égale à 3 ppm, mieux inférieure ou égale à 1 ppm, lorsque la mesure est réalisée sur un échantillon rectangulaire allongé (type epstein ou typiquement 100 x 10 mm²), le champ étant appliqué selon la direction long de l'échantillon et cette direction étant parallèle à la direction de laminage DL de la tôle ;
- une magnétostriction apparente à induction maximale de 1,2 T λₛ^{1,2} inférieure ou égale à 5 ppm, de préférence inférieure ou égale à 3 ppm, mieux inférieure ou égale à 1 ppm, lorsque la mesure est réalisée sur un échantillon rectangulaire allongé (type epstein ou typiquement 100 x 10 mm²), le champ étant appliqué selon la direction du grand côté de l'échantillon et cette direction étant parallèle à la direction travers DT de la tôle ;
- une magnétostriction apparente à induction maximale de 1,2 T λₛ^{1,2T} inférieure ou égale à 10 ppm, de préférence inférieure ou égale à 8 ppm, mieux inférieure ou égale à 6 ppm, lorsque la mesure est réalisée sur un échantillon rectangulaire allongé (type epstein ou typiquement 100 x 10 mm²), le champ étant appliqué selon la direction du grand côté de l'échantillon et cette direction du grand côté de l'échantillon étant parallèle à la direction intermédiaire à 45° de DL et de DT ;
- une rémanence magnétique Br du cycle d'hystérésis majeur du circuit magnétique global réglable à une valeur plus ou moins basse par le biais des différents entrefers répartis entre les pièces découpées.
- la présence d'au moins un entrefer, résiduel ou calibré, à chaque niveau de superposition des feuilles.

Dans certains cas, on pourra remplacer les empilements de feuilles identiques, ou seulement certains d'entre eux, par des pièces uniques plus massives que de simples feuilles.

La solution choisie par les inventeurs permet de conserver l'intérêt de la compacité de construction du transformateur, permettant une forte densité de puissance, grâce aux pièces découpées puis disposées selon l'invention, de la même façon que les noyaux magnétiques en pièces découpées pour transformateur utilisant classiquement du Fe3%Si ou du FeCo. Elle permet aussi d'émettre peu de bruit grâce à un choix approprié des matériaux et/ou de leurs microstructures vis-à-vis des directions empruntées par l'aimantation dans les E et les I superposés. Elle permet enfin de limiter l'effet d'inrush par l'accès à de hauts flux magnétiques en périodes transitoires, par l'obtention d'une faible rémanence du circuit magnétique.

Un bon compromis de transformateur embarqué à culasse magnétique du type découpé-empilé, pour répondre aux exigences cumulées de faibles pertes magnétiques, faible effet d'Inrush, faibles A.Tr, faibles pertes-conducteur, faible à très faible bruit acoustique émis, et forte densité de puissance, est atteint par la solution générale suivante, développée ici dans le cas le plus contraignant d'un transformateur triphasé, et illustrée sur les figures annexées suivantes :
- les figures 1 à 6 qui montrent schématiquement différents exemples de configuration possibles pour des noyaux magnétiques de transformateurs réalisés selon l'invention ;
- la figure 7 qui montre plus en détail un exemple de noyau de transformateur « en E + I » selon l'invention ;
- la figure 8 qui montre un exemple de noyau de transformateur « en double E » selon l'invention ;
- la figure 9 qui montre comment se situent les exemples du tableau 3 dans un diagramme montrant leurs couples « bruit-indice d'inrush » et indiquant la masse des noyaux correspondants ;
- la figure 10 qui représente en perspective une variante de configuration de noyau constituée d'une superposition de trois couches d'empilements de plaques, les plaques étant disposées en E + I à l'intérieur de chaque couche d'empilements, et chaque couche d'empilements étant disposée tête-bêche par rapport à la ou aux couche(s) voisine(s) ;
- la figure 11 qui représente en vue de profil une variante de configuration de noyau comportant un entrefer interplanaire calibré par une couche amagnétique disposée entre chaque couche d'empilements de faible épaisseur superposés, dans une configuration où les deux couches d'empilements représentées sont disposées tête-bêche.

Le module élémentaire de l'invention est un noyau magnétique, de structure de type découpé-empilé en pièces plates en forme de E, de I, de C, ou toutes autres pièces dont les côtés des différentes parties sont rectilignes, et sont soit parallèles, soit perpendiculaires les unes aux autres. Ce noyau magnétique est réalisé par l'utilisation d'au moins un alliage FeNi austénitique à texture {100}<001>, appelée classiquement « texture cube », de composition typique Fe50%-Ni50% en poids (FeNi50), de telle sorte que les deux directions principales de découpe des pièces en forme de E, I, C (ou autres) sont parallèles soit à la direction de laminage DL soit à la direction travers DT (la direction perpendiculaire à DL et située dans le plan de laminage). Ainsi, les E, I, C ou autres sont disposés de façon à former une culasse magnétique autour des bobinages du transformateur, préalablement réalisés. Ce type de structure convient par exemple à des transformateurs monophasés ou triphasés.

Les inventeurs ont eu la surprise de constater que dans une telle configuration, les noyaux de FeNi (typiquement en FeNi50) qui présentent pourtant de forts coefficients de magnétostriction λ₁₀₀ et λ₁₁₁, subissent de faibles déformations mécaniques et n'émettent que de faibles bruits, aussi bien dans une configuration de transformateur monophasé (C + C ou C + I) que dans une configuration de transformateur triphasé (E + E ou E + I).

Les inventeurs ont également constaté que si l'induction de travail Bₜ est trop proche de l'aimantation à saturation Js, alors l'effet d'inrush n'est plus assez amorti.

Les inventeurs ont également constaté que si une proportion mineure de pièces découpées en matériau à haute saturation et magnétostriction élevée (tels que FeSi ou FeCo) était ajoutée au noyau précédent de FeNi, alors l'effet d'Inrush est mieux amorti pour une masse totale identique de noyau magnétique.

La solution proposée consiste à concevoir un noyau magnétique, de structure de type découpé-empilé en pièces plates en forme de E, de I, de C ou autre, dans laquelle les différents côtés de ces pièces sont rectilignes, et sont soit parallèles, soit perpendiculaires les uns aux autres. De préférence, les pièces découpées et ou plus généralement les empilements (de pièces/feuilles découpées) présentent une symétrie, mais ce n'est pas absolument indispensable. Par exemple, la branche centrale d'un E pourrait être plus proche d'une branche latérale que de l'autre branche latérale.

Les pièces des différents matériaux superposées les unes aux autres pour former les empilements n'ont pas forcément la même largeur sur toutes leurs portions correspondantes. En particulier, les différentes portions rectilignes des pièces en FeNi à texture cube (formant l'élément principal du noyau magnétique) ont, de préférence, une largeur supérieure à celle des portions rectilignes correspondantes des pièces optionnelles complémentaires en matériau à haute saturation et magnétostriction élevée (FeSi ou FeCo par exemple), qui sont, préférentiellement, placées d'un côté ou de part et d'autre de l'empilement de pièces en FeNi. Cela permet notamment « d'arrondir » les angles de la section du noyau magnétique, sur lequel il devient alors plus facile de bobiner les conducteurs en cuivre. Cela permet aussi de minimiser la quantité de cuivre utilisée pour le bobinage. Au besoin, pour atténuer suffisamment l'effet d'inrush, on compense la baisse de largeur des portions de FeCo/FeSi par un accroissement du nombre de pièces formant les empilements.

Les pièces formant l'élément principal du noyau magnétique sont, selon l'invention, découpées dans une bande d'alliage austénitique FeNi écrouie selon un processus métallurgique permettant d'obtenir, après recuit, une texture {100}<001>, du type connu appelé « texture cube » . Les pièces sont découpées de telle sorte que :
- soit la direction de laminage DL qui est orientée selon la direction cristallographique <001> est parallèle aux grands côtés des branches latérales du E ou du C ; alors la direction travers de la tôle DT qui est orientée selon la direction cristallographique <100> est parallèle au dos du E ou du C (autrement dit du côté du E ou du C qui relie leurs branches latérales ;
- soit la direction de laminage DL qui est orientée selon la direction cristallographique <001> est parallèle au dos du E ou du C ; alors la direction travers de la tôle DT qui est orientée selon la direction cristallographique <100> est parallèle aux grands côtés des branches latérales du E ou du C.

Si la pièce est découpée en forme de I, des préceptes comparables s'appliquent.

Autrement dit, les arêtes de découpe des différentes portions rectilignes des pièces du noyau doivent toujours être sensiblement parallèles à leurs DL ou à leurs DT respectives, sinon on constate une dégradation rapide des performances de bruit du transformateur lorsqu'il y a, par exemple, une désorientation entre DL et la direction cristallographique <100>.

Typiquement (mais non limitativement), les pièces découpées ont chacune une épaisseur de 0,1 à 0,3 mm. Dans tous les essais qui seront décrits par la suite, chaque pièce découpée avait une épaisseur de 0,2 mm.

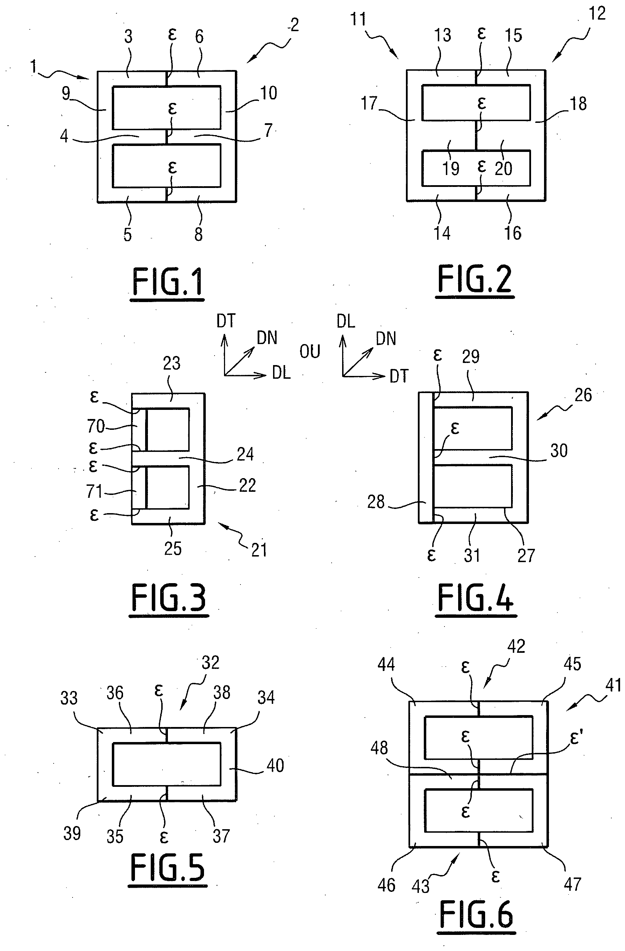

Les figures 1 à 6 montrent très schématiquement différents exemples non limitatifs de configurations possibles pour les noyaux de transformateurs selon l'invention, repérées par rapport aux directions de laminage DL et DT de leurs parties respectives. On a également représenté la direction DN qui forme avec DL et DT un repère orthogonal, et qui correspond donc sensiblement à la direction de superposition des différentes pièces composant le noyau.

La figure 1 montre un noyau de transformateur triphasé en double E, c'est à dire formé de deux sous-noyaux en E 1, 2 placés face à face. Les branches latérales 3-8 et les dos 9, 10 auxquels elles sont rattachées ont tous des sections identiques.

La figure 2 montre un noyau de transformateur monophasé, formé de deux sous-noyaux en E 11, 12 placés face à face. Leurs branches latérales extérieures 13-16 et leurs dos 17, 18 ont la même section, alors que les branches latérales intérieures 19, 20 ont des sections égales au double de la section des autres branches 13-16 et des dos 17, 18. Dans un transformateur monophasé, cela permet d'obtenir une configuration très compacte pour une puissance donnée, par comparaison avec la configuration représentée sur la figure 5.

La figure 3 montre un noyau 21 de transformateur triphasé en forme globale de « huit » avec des sections identiques pour son dos 22 et pour chaque branche 23, 24, 25, les pièces en E étant superposées tête-bêche. On veut dire par là que deux pièces superposées successives du noyau 21 sont superposées de façon alternée, l'une ayant son dos 22 placé à droite et ses branches latérales 23, 24, 25 orientées vers la gauche et l'autre ayant son dos placé à gauche et ses branches latérales orientées vers la droite. On obtient ainsi des espaces vides entre les branches latérales 23, 24 et 24, 25 de chaque pièce en E. Pour obtenir une section de matériau magnétique constante et uniforme sur tout le noyau 21 et, donc, des performances optimales du noyau 21 pour cette configuration, on comble ces espaces vides par des pièces plates en forme de I 70, 71. Des entrefers ε sont ainsi créés sur chaque niveau de superposition entre les branches latérales 23, 24, 25 des pièces plates en forme de E et les extrémités des pièces plates 70, 71 en forme de I. La présence de ces entrefers ε assure que cet exemple est bien selon l'invention.

La figure 4 montre un noyau en E + I 26, formant également un noyau en « huit » pour transformateur triphasé et comportant un entrefer ε entre le E et le I. Dans ce type de structure le sous-noyau en E 27 est fermé par un sous-noyau 28 en I reliant les extrémités des branches 29, 30, 31 du E 27. Cette configuration peut être réalisée de deux façons :
- on peut l'obtenir en plaçant à chaque niveau de superposition du noyau 26 une pièce en E et une pièce en I qui lui est accolée, et en disposant tête-bêche les pièces en E de deux niveaux successifs ; on a ainsi une section de matériau magnétique constante sur tout le noyau 26 tout en conservant la forme en « huit » de la variante de la figure 3 ;
- on peut l'obtenir en accolant un empilement de pièces en E et un empilement de pièces en I.

La figure 5 montre un noyau 32 de transformateur monophasé formé de deux sous-noyaux 33, 34 en C placés face à face, les branches 35, 36, 37, 38 et les dos 39, 40 des C ayant tous une même section et étant tous rectilignes avec les branches 35-38 perpendiculaires aux dos 39, 40.

La figure 6 montre un noyau 41 de transformateur monophasé formé de deux ensembles 42, 43 de sous-noyaux en C 44, 45, 46, 47 placés face à face avec des branches et des dos rectilignes de même section, les deux ensembles 42, 43 (qui sont chacun du même type que le noyau 32 de la figure 5) étant accolés avec un entrefer résiduel ou calibré ε' qui les sépare, de façon à former un noyau 41 dont la forme générale est comparable à celle du noyau de la figure 2, donc avec la branche latérale intérieure 48 qui présente une section double de celles des autres branches latérales et des dos. On a donc un noyau 41 en forme générale de « huit » présentant deux entrefers ε et ε' résiduels ou calibrés perpendiculaires l'un à l'autre et divisant le noyau en quatre parties symétriques.

L'alliage austénitique FeNi utilisé dans le cadre de l'invention peut contenir de 30 à 80% de Ni, mais plus préférentiellement de 45 à 60% de Ni pour obtenir une aimantation à saturation Js la plus élevée possible et, ainsi, pouvoir réduire autant que possible la section des différentes parties du noyau, donc la masse du noyau.

L'alliage peut contenir jusqu'à 10% en poids au total d'éléments d'addition tels que Cr, Si, Al, Zr, Mo, W, V, Nb, Cu, Mn, ainsi que de tous éléments résiduels et impuretés qui se trouvent habituellement dans les alliages élaborés dans un four à arc ou à induction sans avoir été ajoutés volontairement. De préférence le total de ces éléments d'addition, résiduels et impuretés sera de au plus 2%. Une addition significative de certains autres éléments que Ni peut avoir pour avantage de limiter les pertes par courants induits dans les tôles magnétiques en accroissant la résistivité de l'alliage. Mais la contrepartie en sera une dégradation de Js. Cette raison justifie les limites de 10 et 2% citées plus haut.

On peut éventuellement utiliser des alliages différents dans les empilements d'un même noyau, en les disposant sous forme de couches successives d'épaisseurs définies ou en les mélangeant à l'intérieur de l'empilement, si on y voit un intérêt, par exemple en termes de performances du noyau. Mais chacun de ces alliages devra répondre aux exigences de composition citées plus haut.

Les pièces découpées en forme de E, I, C ou autre sont ensuite isolées électriquement les unes des autres par un revêtement épais de 1 à quelques µm, qui est déposé sur la surface de la bande écrouie. Deux pièces plates superposées d'un empilement sont donc séparées par au moins une couche de revêtement isolant. On peut utiliser, pour cette isolation, de façon connue, des dépôts de matériaux isolants, tels que des résines organiques (souvent appelées « vernis d'isolation » ou « coatings »), ou des oxydes tels que CaO ou MgO ou Al₂O₃. On peut aussi oxyder préférentiellement la surface des pièces lors d'un recuit oxydant conduisant à la formation superficielle d'oxydes de Fe et de Ni. On peut aussi phosphater la surface de la pièce sur une couche d'accroche en oxydes de Ni et Fe. Cette liste de procédés d'isolation n'est, bien entendu, pas limitative. En particulier, on peut remplacer le dépôt de matériau isolant décrit précédemment par une insertion, entre les pièces à isoler, lors de la formation de l' empilement, de feuilles d'un matériau isolant et non magnétique d'épaisseur calibrée (typiquement de quelques dizaines de µm à quelques dixièmes de mm), qui aurait aussi pour fonction le réglage de l'entrefer séparant deux empilements pour certaines configurations du noyau. Une matière plastique, du papier, du carton, une mousse rigide, un composite isolant et non magnétique, sont des exemples de tels matériaux. Le dépôt d'isolant et l'insertion de feuilles isolantes peuvent être cumulés.

Il doit être entendu qu'un « empilement », au sens où on l'entend dans la description, peut, s'il s'avère que cela permet d'obtenir les résultats recherchés, être constitué d'une seule pièce découpée, plus ou moins épaisse. Dans le cas général, il sera cependant préférable d'utiliser, pour une épaisseur totale donnée, plusieurs feuilles relativement minces identiques, isolées les unes des autres, pour constituer l' « empilement », afin notamment de limiter la formation de courants de Foucault qui pourraient dégrader les performances du noyau.

Les pièces sont ensuite recuites sous gaz protecteur (Ar, H₂, H₂ + N₂, N₂ ou autre), durant quelques minutes à quelques heures, de façon à obtenir une structure de grain homogène de taille typiquement inférieure ou égale à 200 µm, une absence totale de croissance anormale (qui générerait des gros grains mal orientés cristallographiquement), et une texture cube aiguë, c'est à dire avec au moins 80%, et de préférence au moins 95%, des grains ayant leur orientation cristallographique s'écartant d'un angle ω égal à au plus 20° par rapport à l'orientation idéale {100}<001>.

En variante, le recuit de texturation, puis le dépôt de revêtement isolant électrique, peuvent être réalisés avant la découpe des pièces.

Les pièces recuites et revêtues d'isolant électrique, sont superposées pour constituer les « empilements » (dont on vient de dire qu'ils pouvaient éventuellement, au moins pour certains d'entre eux, être constitués chacun d'une seule pièce), les empilements étant éventuellement séparés les uns des autres par des feuilles de matériau isolant, de telle sorte que les E, I, C ou autres, que les empilements permettent de construire par leurs superpositions et/ou leurs juxtapositions, puissent former une culasse magnétique autour de laquelle sont disposés des bobinages préalablement réalisés. Mais on pourrait cependant réaliser des bobinages après l'assemblage de la culasse. Ce type de structure convient, par exemple, à des transformateurs monophasés ou triphasés.

La mise en place d'un isolant entre les empilements n'est pas indispensable, mais elle permet, grâce au contrôle de l'entrefer ε, ε' qu'elle procure, de mieux contrôler la rémanence du circuit magnétique et le courant magnétisant du transformateur, d'accroitre les performances d'Inrush, et de rendre plus reproductibles les performances des transformateurs dans une production industrielle.

Il n'est pas obligatoire, mais avantageux, de superposer aux empilements de pièces en FeNi d'autres empilements contenant une proportion volumique minoritaire (c'est-à-dire constituant moins de 50% du volume total du noyau) de pièces ayant la même forme que celles en FeNi citées précédemment et des dimensions identiques ou très voisines de celles de ces mêmes pièces, mais réalisées dans des matériaux magnétiques à haute saturation connus en eux-mêmes tels que FeSi et FeCo. Elles sont superposées en étant isolées électriquement les unes des autres, de la même façon que les pièces en FeNi.

Ces matériaux à haute saturation fonctionnent à très basse induction dans le transformateur. Ces matériaux à Js élevé peuvent être notamment : Fe-3%Si, Fe-6,5%Si, Fe-15 à 50%Co-(V, Ta, Cr, Si, X) texturés ou non avec X choisi parmi un élément ou davantage parmi Mo, Mn, Nb, Si, Al, le fer doux, certains aciers, les inox ferritiques Fe-Cr contenant 5 à 22%Cr en poids et 0 à 10% au total de Mo, Mn, Nb, Si, Al, V, les aciers électriques Fe-Si-Al N.O., qui ont tous une valeur de Js nettement supérieure aux 1,6 T du FeNi50 (qui a le Js le plus élevé parmi les FeNi austénitiques). Une Js d'au moins 2 T est nécessaire.

Des exemples de matériaux classiques à haute Js avec leur point de fonctionnement magnétique B(H) donné à 800 A/m (B₈₀₀) et 8000 A/m (B₈₀₀₀) sont donnés dans le tableau 1 ci-dessous (les compositions données sont, bien entendu, approximatives et n'excluent pas la présence d'autres éléments d'alliage en relativement faibles quantités ; de même la liste d'exemples ne prétend pas être exhaustive et tout matériau présentant des caractéristiques comparables pourra être utilisé). En effet c'est autour du coude de la courbe B(H), donc vers B₈₀₀ dans ce type de matériau, que l'on atteint le meilleur compromis entre réduction de volume (B élevé) et faible consommation du transformateur (faible A.tr). Le B₈₀₀₀ rend compte, quant à lui, de l'induction d'approche à saturation, mise à profit non seulement dans le potentiel de densité de puissance (Bₜ < B₈₀₀₀) mais aussi dans la réduction de l'effet d'inrush.

**Tableau 1 : Compositions de matériaux à haut Js utilisables dans l'invention et leurs points de fonctionnement magnétique à 800 A/m et 8000 A/m**

| Alliage | %Co | %Si | % Cr | % V | Fe | Js | B₈₀₀ (T) | B₈₀₀₀ (T) |
|---|---|---|---|---|---|---|---|---|
| 1 | 15 | | | | Reste | 2,25 | 2.08 | 2.24 |
| 2 | 15 | 1 | | | Reste | 2,21 | 1.95 | 2.18 |
| 3 | 18,5 | | | | Reste | 2,32 | 2.12 | 2.30 |
| 4 | 18 | 1 | | | Reste | 2,26 | 2 | 2.23 |
| 5 | 10 | | | | Reste | 2,22 | 2.01 | 2.12 |
| 6 | 27 | | 0.5 | | Reste | 2,38 | 2.03 | 2.28 |
| 7 | 48 | | | 2 | Reste | 2,35 | 2.1 | 2.35 |
| 8 | 0 | 3 | | | Reste | 2,03 | 1.9 | 2 |

Dans les exemples qui suivront, on considérera le cas de transformateurs triphasés, nécessitant la découpe de pièces planes en forme de E et/ou de I.

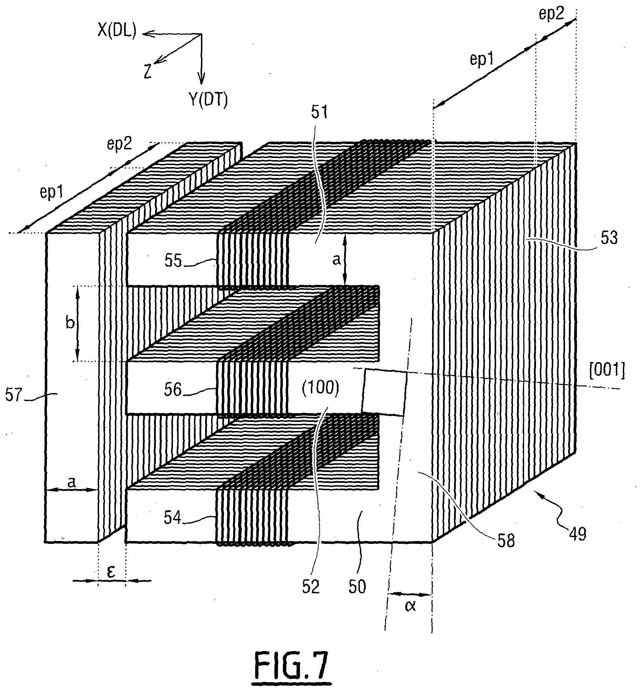

Dans un premier exemple représenté sur la figure 7, on utilise un noyau de transformateur 49 comportant une structure en E + I du type de celle représentée schématiquement sur la figure 4. Les deux branches latérales extérieures 50, 51 et la branche latérale intérieure 52 de l'empilement en E 53 portent chacune un des enroulements 54, 55, 56 de chaque phase du transformateur. L'empilement en I 57 est accolé aux extrémités libres des branches latérales 50, 51, 52 du E 53. Chaque empilement 53, 57 est réalisé, selon l'invention, par superposition sur une épaisseur ep1 de tôles à texture cubique en alliage Fe-Ni contenant typiquement de 40 à 60% de Ni. Les empilements en E 53 et en I 57 sont séparés par un entrefer ε. On notera que dans cet exemple, le dos 58 et les trois branches latérales 50, 51, 52 de l'empilement en E 53 et l'empilement en I 57 ont tous la même largeur a. Les deux empilements en E 53 et en I 57 sont superposés à deux autres empilements, en E 53' et en I 57', composés eux-mêmes d'une superposition de tôles en matériau à haute Js d'épaisseur ep2, de sorte que les deux couples d'empilements en E 53, 53' et en I 57, 57' ont une épaisseur totale ep1 + ep2. Dans l'exemple non limitatif représenté, les tôles des empilements 53', 57' en matériau à haute Js ont les mêmes formes et dimensions que les tôles constituant les empilements 53, 57 auxquels ils sont superposés.

Dans cet exemple, les côtés de découpe rectilignes des tôles superposées constituant les empilements en E 53, 53' et des tôles superposées constituant les empilements en I 57, 57' sont alignés sur les axes DL (direction de laminage de chaque tôle) et DT (direction perpendiculaire à la direction de laminage de chaque tôle) de la tôle de FeNi à texture cube, notée cristallographiquement {100}<001>. Dans l'exemple représenté, l'axe des branches latérales 50, 51, 52 du E 53 est aligné sur DL tandis que le I 57 et le dos 58 du E sont alignés suivant DT. Mais on aurait tout aussi bien pu inverser la disposition de découpe en demeurant dans le cadre de l'invention. Ce sont les qualités d'alignement des axes <100> sur DL (ou sur DT) et du plan (100) sur le plan de laminage, qui déterminent, de façon surprenante, la réduction des vibrations et du bruit émis par le noyau magnétique. Le plan cristallographique (100) de l'orientation « cubique » idéale est représenté sur la figure 7 comme étant parfaitement parallèle au plan de laminage (qui est le plan du E 53), mais on peut accepter jusqu'à 20° de désorientation ω entre ces deux plans pour que l'effet surprenant agisse significativement. De préférence cette désorientation ω est d'au plus 10°, mieux d'au plus 5°. De même on peut accepter jusqu'à 20° de désorientation α entre les axes [001] ou [010] et, respectivement, DL ou DT, pour que l'effet surprenant agisse significativement (voir la figure 7 pour une visualisation de cette désorientation a). De préférence cette désorientation α est d'au plus 10°, mieux d'au plus 5°.

Il en est de même, bien sûr, pour les tôles de l'empilement en I 57, et il en serait de même pour les tôles d'un empilement en C tel que ceux schématisés sur les figures 5 et 6.

Ainsi dans le cas d'une texture cube ayant au moins 80% (en surface ou volume) des grains possédant de telles orientations w et α (c'est-à-dire désorientées d'au plus 20° selon les différents axes et plan considérés), on observe le phénomène étonnant de vibrations très réduites du noyau de transformateur 49 en entier, et donc un bruit de magnétostriction faible.

De plus le réglage de l'entrefer ε entre le E 53 et le I 57 permet d'établir la perméabilité équivalente du circuit magnétique, et en même temps règle la rémanence du circuit magnétique. La largeur de cet entrefer ε peut être réglée par des cales.

De plus, la superposition, comme représenté, d'empilements 53', 57' d'une épaisseur ep2 de tôles en E ou en I en un matériau à haute saturation (FeCo ou FeSi par exemple) à chacun des deux empilements 53, 57 permet à ce matériau de participer à l'amortissement de l'effet d'inrush ce qui permet de dimensionner la partie principale en FeNi du transformateur de façon à faire travailler le transformateur à une induction plus élevée. On peut ainsi réduire la section et la masse du circuit magnétique. L'homme du métier sait trouver le bon compromis entre la masse ajoutée de FeCo ou FeSi comparativement à la masse économisée de FeNi, pour une même épaisseur ep1 + ep2 du noyau 49.

Il doit être compris que les tôles en ce matériau à haute Js n'ont pas besoin d'avoir une texture d'un type particulier. Dans le cas où ils ont une texture marquée quelconque, cette texture n'est pas forcément orientée d'une façon précise par rapport à DL et DT. Seules les orientations des côtés de découpe des tôles par rapport à DL et DT sont importantes, en ce que ces orientations sont identiques à celles des côtés de découpe des tôles en FeNi à texture cube du matériau à faible magnétostriction.

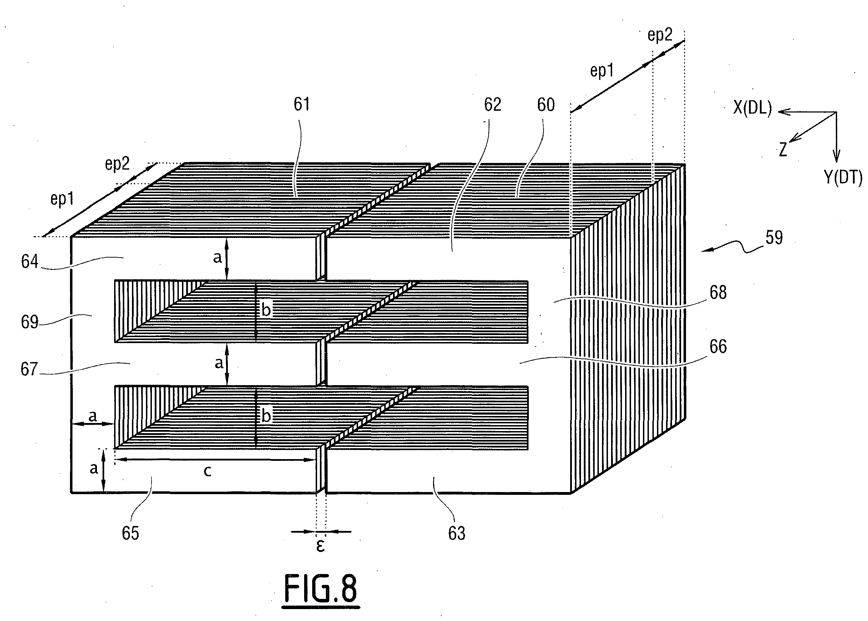

Dans un deuxième exemple de noyau magnétique de transformateur triphasé selon l'invention dit « en double E », représenté sur la figure 8 (on n'a, cette fois, pas représenté les bobinages), le noyau 59 du transformateur se présente sous la forme de deux empilements 60, 61 en colonnes d'éléments en feuilles, découpés chacun en forme de E, les deux empilements 60, 61 étant disposés face à face pour former un circuit magnétique et séparés par un entrefer ε. La largeur de cet entrefer ε peut être réglée par des cales. On retrouve la configuration schématisée sur la figure 1. Les branches latérales extérieures 62, 63, 64, 65 et intérieures 66, 67 ont une même largeur a, égale à la largeur des dos 68, 69 qui les relient. Les branches latérales 62-67 de tous les empilements 60, 61 ont une même longueur c et les branches latérales 62-67 de chaque empilement sont espacées les unes des autres d'une longueur b.

Chacun de ces empilements 60, 61 est réalisé à partir d'une ou, de préférence, plusieurs feuilles découpées qui sont au moins majoritairement en volume, c'est-à-dire pour plus de 50% du volume total du noyau, en un premier matériau qui est un alliage FeNi à 30-80% (de préférence 45-50%) de Ni, à texture cube {100}<001>, et sont revêtues d'isolant ou séparées par une feuille d'isolant, comme expliqué précédemment. Ces feuilles en FeNi sont superposées sur une épaisseur ep1. L'orientation α de la texture des feuilles par rapport aux directions DL et DT telles que définies précédemment et illustrée pour l'exemple de la figure 7 est aussi présente dans cet exemple et n'est pas rappelée sur la figure 8.

De préférence, comme dans les exemples représentés sur les figures 7 et 8, le noyau est complété par des superpositions d'épaisseur ep2 constituées chacun d'une ou, de préférence de plusieurs feuilles d'un deuxième matériau, à haut Js, comme ceux définis dans le tableau 1.

La présence d'un entrefer ε entre deux empilements se faisant face est obligatoire dans le cadre de l'invention (en l'absence d'un tel entrefer ε, on aurait, pour les configurations des figures 7 et 8, un noyau à structure « en huit » ininterrompue, non conforme à l'invention). Elle est avantageuse à plusieurs points de vue :
- elle permet d'abaisser l'induction rémanente du circuit magnétique ;
- elle facilite le montage des bobinages ;
- elle est préférable pour le remplissage de la fenêtre de bobinage, donc pour l'accroissement de la densité de puissance volumique.

L'entrefer ε peut, d'ailleurs, avoir une largeur différente pour les deux groupes de feuilles, celui de feuilles de FeNi texturé et celui de feuilles de matériau à haut Js.

La possible présence d'un entrefer ε de valeur différente pour les deux groupes de feuilles est également valable pour les autres variantes de noyaux selon l'invention, notamment pour la variante de la figure 7. On notera que dans la variante de la figure 3, ce sont les entrefers ε séparant les plaques en I 70, 71 des branches 23, 24, 25 des plaques en E entre lesquelles elles sont placées qui jouent le rôle de l'entrefer ε visible sur les figures 6 et 7.

La tendance dans l'aéronautique civile est de concevoir des transformateurs de bord avec un bruit acoustique émis de plus en plus en plus bas, voire très bas lorsqu'il est situé à côté du poste de pilotage et que les pilotes travaillent sans casque pour communiquer. Comme tout composant embarqué, le transformateur doit être le plus léger et le moins encombrant possible, consommer le moins de courant possible et chauffer le moins possible, et aussi pouvoir encaisser sans dommages pour son intégrité (ses isolants, ses composants électroniques) de fortes variations de charge, c'est à dire de fortes variations du courant d'appel du transformateur. Ce courant d'appel, dit « courant d'Inrush», doit être aussi faible que possible, comme on l'a vu.

Il est établi dans la littérature récente que le courant maximal d'inrush (courant transitoire magnétisant d'un transformateur) est proportionnel à (2Bₜ + Bᵣ - Bₛ) où Bₜ est l'induction de travail nominale (issue du dimensionnement du circuit magnétique), Bᵣ est l'induction rémanente du cycle d'hystérésis majeur du circuit magnétique (à savoir de l'ensemble constitué du noyau ferromagnétique et des entrefers localisés ou répartis selon la structure de construction du noyau) et Bₛ est l'induction à saturation du noyau.

Pour obtenir un faible courant maximal d'Inrush, il faut :
- un matériau à forte aimantation à saturation (FeSi ou FeCo, de préférence à FeNi et aux nanocristallins) ;
- un circuit magnétique (et non pas simplement un matériau constituant le noyau, considéré isolément) à faible rémanence, ce qui peut être obtenu soit directement par le choix du matériau (exemple du cycle d'hystérésis couché des alliages nanocristallins), soit par un effet de construction de la culasse (entrefers répartis ou localisés, produisant suffisamment de champ démagnétisant)
- une induction de travail Bₜ faible ; mais cela est antinomique avec la densité de puissance élevée, la miniaturisation et l'allégement des transformateurs, et ne constitue donc pas une solution satisfaisante au problème posé, sauf si des caractéristiques structurelles du noyau avantageuses sur d'autres points (notamment le bruit) permettaient de conserver au noyau un encombrement et une masse encore acceptables pour des Bt relativement faibles ;
- une faible section de noyau magnétique ce qui conduirait à utiliser un matériau à haute saturation ;
- une forte section d'aire des bobines.

En bref, si on ne considère que la question de l'inrush, le circuit magnétique idéal comporte un alliage à haute aimantation à saturation (FeSi, FeCo) et faible rémanence, utilisé à induction réduite. Cela passe par une conception et un dimensionnement optimisés du circuit magnétique, et un calibrage adéquat du ou des entrefers à partir de ces matériaux à haute aimantation à saturation Js. Un entrefer de l'ordre de 1 µm typiquement entre deux sous-noyaux en forme de C ou de E ou en forme de E et de I, n'aura que peu d'effet sur la rémanence intrinsèque du matériau, et alors un FeNi50 à texture cube {100}<001> conserve son induction rémanente très élevée (proche de Js = 1,6 T, typiquement 1,4 à 1,55 T). Dans ce cas d'entrefer, et selon la formule donnant l'indice d'inrush ci-dessus, l'amortissement de l'effet d'inrush ne sera pas très bon. Pour baisser la rémanence on introduit un entrefer de, par exemple, 200 ou 600 µm, ou encore 0,1 mm (calibré par un dépôt ou une couche de matériau rapporté) entre les couches de pièces découpées, et aussi entre les pièces aboutées comme le E 53 et le I 57 de l'exemple de la figure 7. La valeur de l'entrefer nécessaire à une réduction significative de Bᵣ dépend beaucoup de la configuration des empilements des différentes pièces magnétiques, comme on le verra ci-après dans la description des exemples selon l'invention et des résultats qu'ils permettent d'obtenir par rapport aux exemples de référence. Dans ce cas, l'induction rémanente Bᵣ peut être réduite, allant de quelques % à quelques dizaines de %. A noter qu'on n'a pas intérêt, à l'inverse, à exagérer la largeur de l'entrefer ε, car d'après le théorème d'Ampère, cela coûterait beaucoup plus de courant magnétisant, donc provoquerait plus d'échauffement par effet Joule, plus de consommation électrique, et un rendement diminué. Il faut donc trouver un bon compromis entre un faible inrush d'une part et de faibles échauffement et consommation de courant d'autre part. L'homme du métier saura par le calcul et l'expérience trouver un équilibre judicieux entre ces exigences.

Dans le cas optionnel où on veut ajouter un deuxième matériau, qui, lui, présente une Js élevée (FeCo ou FeSi), afin d'amortir encore plus l'inrush, on veut que ce deuxième matériau ne fonctionne que très peu en régime permanent, donc qu'il ne soit que peu, voire très peu aimanté par le courant magnétisant défini pour le premier matériau (FeNi cubique) avec son ou ses entrefer(s). En effet le deuxième matériau à Js élevée est principalement présent pour fonctionner en régime transitoire lors des forts appels de courant du transformateur. S'il s'aimantait largement aussi en régime permanent du transformateur, alors sa magnétostriction élevée entraînerait un bruit rédhibitoire pour le transformateur. Pour limiter son aimantation on peut introduire, dans les empilements composés de ce deuxième matériau à Js élevée, un entrefer spécifique ε₂ dont la valeur, qui peut être différente de celle de l'entrefer ε₁ séparant les empilements composés de FeNi à texture cubique, est obtenue à partir de l'application du théorème d'Ampère, du courant magnétisant du transformateur en régime permanent et des caractéristiques magnétiques du deuxième matériau. Par exemple, dans l'exemple de la figure 7, si l'entrefer ε₁ entre l'empilement de feuilles en FeNi en E et l'empilement de feuilles de FeNi en I vaut 0,1 mm, on peut être amené à introduire un entrefer ε₂ de 0,2 mm entre l'empilement en E de matériau à haute Js et l'empilement en I de matériau à haute Js. Les couches intercalaires utilisées, de préférence, pour calibrer les entrefers ε₁ et ε₂ peuvent être en tout matériau isolant non magnétique très léger tel que le papier, le carton, un plastique, une mousse rigide, un composite...

De manière générale, ε₁ peut être compris, de préférence, entre 2 et 1500 µm et ε₂ peut être compris, de préférence, entre 2 et 3000 µm.

Ces valeurs peuvent aussi être transposées notamment à la configuration en E + E de la figure 8.

Si on cumule les contraintes de faible encombrement et faible masse, de faibles pertes magnétiques, de faible à très faible bruit acoustique et de faible effet d'inrush dans un transformateur aéronautique embarqué, il reste à repérer les solutions les plus intéressantes pour optimiser chaque grandeur contraignante vue précédemment. Le tableau 2 résume les réflexions des inventeurs sur ce point, dans le cas, conforme à l'invention, de circuits magnétiques découpés/empilés (en E, I, ou C) :

**Tableau 2 : Propriétés attendues des matériaux utilisables pour constituer un noyau monomatériau pour des circuits découpés-empilés (appréciations d'intérêt décroissant : excellent > très bien > bien > moyen > médiocre > mauvais)**

| Matériau | Entrefer ε₁ (µm) | Epaisseur (mm) | Hc (A/m) | Bₜ (T) | Densité de puissance | Bruit acoustique émis | Pertes magnétiques | A.tr et pertes conducteur | Effet d'inrush | Coût |
|---|---|---|---|---|---|---|---|---|---|---|
| Matériau idéal | | | | | excellent | excellent | excellent | excellent | excellent | excellent |
| Fe3%Si-N.O. | résiduel | 0,2 | 40-50 | 1,8 | très bien | mauvais | médiocre | bien | médiocre | excellent |
| Fe3%Si-G.O. | résiduel | 0,18 | 20 | 1,8 | très bien | mauvais | médiocre | bien | médiocre | excellent |
| Fe3%Si-N.O. | 900 µm | 0,2 | 40-50 | 1,8 | très bien | mauvais | médiocre | moyen | médiocre | excellent |
| Fe3%Si-N.O. | 900 µm | 0,2 | 25 | 1 | moyen | médiocre | moyen | moyen | bien | excellent |
| Fe3%Si-N.O. | 900 µm | 0,2 | 25 | 0,5 | mauvais | très bien | excellent | moyen | excellent | excellent |
| Fe-50%Co | résiduel | 0,2 | 20-40 | 2,1 | excellent | mauvais | médiocre | médiocre | médiocre | médiocre |
| Fe-50%Co | 900µm | 0,2 | 20-40 | 2,1 | excellent | mauvais | moyen | moyen | médiocre | médiocre |
| Fe-50%Co | 900 µm | 0,2 | 20-40 | 0,3 | mauvais | très bien | excellent | moyen | excellent | médiocre |
| Fe-50%Ni « transformer » | résiduel | 0,2 | 2-5 | 1 | moyen | médiocre | très bien | très bien | bien | moyen |
| Fe-50%Ni «transformer» | 900µm | 0,2 | 2-5 | 1 | moyen | médiocre | bien | bien | bien | moyen |
| Fe-50%Ni texture « cubique » {100}<001> | 0,2mm | 0,2 | 5-10 | 1 | moyen | très bien | moyen | moyen | bien | Moyen |
| Fe-65%Ni texture « cubique » {100}<001> | 0,2mm | 0,25 | 1-3 | 0,8 | moyen | très bien | bien | bien | bien | moyen |
| Fe-80, 1%Ni-5%Mo (Mumétal) | 0,05mm | 0,2 | 0,5-1 | 0,4 | mauvais | très bien | très bien | très bien | bien | médiocre |
| Fe-36%Ni (INVAR) à texture « cubique » {100}<001> | 0,18mm | 0,2 | 5-10 | 0,8 | moyen | très bien | bien | bien | bien | bien |
| Fe-29,5%Ni | 0,15 | 0,2 | 7-11 | 0,3 | mauvais | bien | très bien | très bien | bien | bien |

On considère ici la qualité d'alliage Fe-50%Ni dite qualité « transformer ». Elle est connue de l'état de l'art depuis longtemps, et correspond à une gamme métallurgique amenant une microstructure finale à gros grains (de quelques centaines de µm à quelques mm), avec différentes composantes de texture d'amplitude moyenne mais ne présentant pas de composante de texture cube significative, et présentant en conséquence des faibles pertes magnétiques sur des circuits en C ou en E, et avec une magnétostriction apparente à saturation de l'ordre de 10-20 ppm. On trouve une description de tels alliages notamment dans les références «Alloy 48» publiée par Engineering Alloys Digest, Inc. Upper Montclair, New Jersey, June 1975, et F.J.G.Landgraf, "Effect of annealing on Magnetic Properties of Fe-47,5%Ni alloy", J.Mater. Eng. (1989) Vol.11, N°1, pp 45 - 49.

Dans une variante de configuration, qui sera également parmi celles considérées dans les essais qui vont être décrits (tableaux 3 et 4), les plaques superposées formant le noyau peuvent être découpées en forme de « huit ». On obtient alors un noyau de forme générale identique à celui qui est représenté sur la figure 1, mais dépourvu d'entrefer, donc non conforme à l'invention.

L'invention est donc basée sur l'utilisation, comme seul matériau ou comme principal matériau constitutif du noyau, d'un alliage austénitique FeNi à texture cubique, de préférence avec une aimantation à saturation élevée, tels que les alliages contenant de 30 à 80% de Ni, de préférence 40 à 60% de Ni, et au plus 10%, mieux au plus 2% d'autres éléments que Fe et Ni. Les inventeurs ont en effet découvert avec étonnement que l'utilisation de tels matériaux dans les conditions de l'invention réduisait significativement le bruit de magnétostriction, alors que les coefficients de magnétostriction vraie de ces matériaux restent pourtant élevés (par exemple λ₁₀₀ > 20ppm).

Cet exemple de mise en œuvre de l'invention va être mieux décrit par un certain nombre d'exemples précis ci-après qui considèrent différentes épaisseurs ep1 et ep2 pour les empilements réalisés avec le premier et le deuxième matériau éventuel, respectivement, et pour différents matériaux magnétiques de référence, pour réaliser un circuit magnétique qui est :
- soit découpé « en huit ininterrompu», et donc dépourvu d'entrefer (donc non conforme à l'invention), ou, conformément à un mode de réalisation de l'invention, pourvu d'un entrefer résiduel (Res.) ε de l'ordre de 1 µm entre les E formant le « huit » ;
- soit réalisé par la mise face à face de deux empilements en E avec ménagement d'un entrefer ε calibré de quelques µm ou dizaines de µm (voire jusqu'à 1 mm) entre les deux E (exemple de la figure 1).

Dans les cas où plusieurs matériaux sont utilisés, on a indiqué deux valeurs pour cet entrefer ε, pouvant être différentes, et correspondant successivement à l'entrefer ε₁ séparant les E ou les E + I au niveau des empilements réalisés avec le premier matériau et à l'entrefer ε₂ séparant les E ou les E + I au niveau des empilements réalisés avec le deuxième matériau. La colonne « config. » (pour « configuration ») précise quelle morphologie du noyau a été adoptée pour chaque essai.

Les résultats sont donnés pour un transformateur triphasé embarqué ayant les caractéristiques suivantes :
- fréquence fondamentale : 360Hz ;
- courant primaire magnétisant du transformateur : I1 = 115A ;
- tensions primaire V1 et secondaire V2 du transformateur : V1 = V2 = 230V,
- puissance électrique apparente transformée par le transformateur : P = 46 kVA environ.

La géométrie du circuit est fixée par les paramètres a, b et c fixés dans l'exemple de la figure 8 à :
- a (largeur de chaque branche horizontale et verticale des huit ou des E) = 20mm ;
- b (intervalle entre chaque branche horizontale des huit ou des E) = 50 mm ;
- c (longueur de chaque branche horizontale des huit ou des E, à l'exception de la partie commune entre cette branche horizontale et la branche verticale à laquelle elle est rattachée) = 60 mm.

Il est impératif d'isoler électriquement au moins l'une des faces, mieux les deux faces, des bandes ou feuilles de FeNi avec une épaisseur de matériau isolant de quelques µm jusqu'à, de préférence, 5-10 µm, pouvant résulter :
- soit d'un dépôt de vernis, ou de résine organique, avec ou sans charge minérale, déposé après découpe de la feuille et recuit de texturation ;
- soit d'un recuit oxydant sur les feuilles après recuit de texturation, produisant la formation d'une couche oxydée à la surface des feuilles ;
- soit d'un saupoudrage dosé ou du dépôt d'une suspension de particules d'oxydes (alumine, magnésie, chaux...) dans un liquide et ses additifs, tel que par exemple le «lait de magnésie (eau + colle + poudre fine de particules de MgO de quelques µm de diamètre) ;
- soit du dépôt sur la bande d'alliage FeNi d'une couche apte à créer une isolation électrique et résistant à de hautes températures de recuit (900-1000°C typiquement) : par exemple le dépôt de certains organométalliques comme le méthylate de Mg, formant du MgO peu adhérent après un recuit haute température du noyau de transformateur déjà assemblé, les particules restant coincées entre les feuilles, garantissant un entrefer calibré entre les feuilles ; dans les exemples du tableau 2, les deux faces des feuilles étaient revêtues de 2 µm de méthylate de Mg.

Comme on l'a dit, l'isolation pourrait aussi être assurée par l'interposition dans les empilements de feuilles isolantes non magnétiques entre les feuilles successives composant ces empilements.

Cette isolation est aussi pratiquée, de la même façon, sur les feuilles de matériau à haut Jₛ du deuxième empilement.

Il est bien connu de l'homme du métier que si l'induction de travail est abaissée pour réduire le bruit et l'effet d'inrush, alors il faut accroitre la section magnétique (et donc la masse du circuit magnétique) pour maintenir la même tension induite V2 de 230V, et donc garantir la puissance transformée P. Le cahier des charges de ce transformateur à bas bruit est un Indice d'inrush In inférieur à 0,8 et un bruit inférieur ou égal à une limite que l'on peut situer entre 55 et 80 dB selon l'emplacement du transformateur dans l'aéronef.

Dans les exemples de référence, le premier matériau est soit du FeSi, soit du FeCo, et il n'y a pas de deuxième matériau ajouté.

Les résultats des essais sont reportés dans le tableau 3. Les résultats satisfaisant le cahier des charges précité sont soulignés.

On rappelle que l'invention vise à obtenir des transformateurs performants présentant les caractéristiques suivantes.

Ils ont une densité massique de puissance la plus grande possible, typiquement au moins égale à 3 kVA/kg, et de préférence supérieure 4 kVA/kg, voire même supérieure à 5 kVA/kg à 400Hz. Les masses considérées sont celles du noyau magnétique seul.

Le bruit du transformateur d'origine magnétostrictive est inférieur ou égal à une limite située entre 55 et 80 dB selon les cas de cahiers des charges. Certains exemples selon l'invention ont effectivement un bruit inférieur à 55 dB, et les transformateurs correspondants peuvent donc être placés dans un poste de pilotage.

Ils ont un indice d'inrush de 0,8 au maximum.

Ces caractéristiques sont obtenues avec une masse de noyau de 16 kg au maximum.

Il ressort des essais ci-dessous qu'il faut utiliser, pour former le noyau, une bande ou une feuille d'alliage FeNi de faible épaisseur (typiquement 0,2 mm) et des éléments découpés qui en sont issus, caractérisés par de faibles pertes magnétiques en ondes d'induction sinusoïdales issues du noyau magnétique inférieures à 20 W/kg à 400 Hz, de préférence inférieures à 15 W/kg et de préférence inférieures à 10 W/kg, pour une induction maximale de 1 T.

L'alliage FeNi doit contenir de 30 à 80% de Ni, de préférence de 40 à 60% de Ni, et au plus 10% au total d'éléments d'alliage tel que Cr, Si, Al, Zr, Mo, W, V, Nb, Cu, Mn et d'impuretés diverses résultant de l'élaboration, de préférence au plus 2%.

Les feuilles en FeNi présentent une composante de texture cube {100}<001> aigue (plus de 80% des grains en volume ou surface). Le grain est considéré comme cubique lorsque sa désorientation est d'au plus 20° par rapport à l'orientation idéale, de préférence au plus 10°, mieux au plus 5°.

Les feuilles en FeCo (FeCo27 ou FeCo50V2) et en FeSi à 3% de Si utilisées soit dans des exemples de référence, soit comme deuxième matériau ajouté dans des exemples selon l'invention, peuvent être d'une texture quelconque, comme ils ne sont exploités que pour leur aimantation à saturation Js élevée et, éventuellement, leur induction de travail Bₜ basse qui limite leur magnétostriction. Dans les cas présents, le FeCo27 de l'exemple 1 présente une texture avec 43% de composante {110}<001> dite Goss, 38% de composantes de texture aléatoire, le restant comportant des textures selon d'autres composantes mineures pour quelques % chacune, le FeCo27 de l'exemple 12B présente une composante de texture Goss de 10% et une texture aléatoire pour le restant, les FeCo49V2 des différents exemples 2 à 6 présentent 14,5% de composante {001}<110>, 14% de composante {112}<110>, 13,5% de composante {111}<110>, 26% de composante {111}<112> et 32% de composantes de texture aléatoire. Les FeSi3 ont pour certains une structure à grains non orientés (NO), donc entièrement aléatoire (exemples 7 à 10) et pour d'autres (exemples 11-12) une structure à grains orientés (GO), c'est-à-dire à texture de Goss {110}<001 > tel que présenté précédemment.

Les feuilles formant le noyau sont découpées en éléments en forme de E, I, ou C, ou toute autre forme dont les côtés sont rectilignes et perpendiculaires ou parallèles les uns par rapport aux autres. Les côtés des feuilles sont sensiblement perpendiculaires ou parallèles à l'une de la direction de laminage de la bande DL et de la direction DT perpendiculaire à la direction de laminage DL. Le plan cristallographique (100) de l'orientation « cubique » idéale est représenté sur la figure 7 comme étant parfaitement parallèle au plan de laminage (qui est le plan de l'empilement en E 53) mais on peut accepter jusqu'à 20° de désorientation ω entre ces deux plans pour que l'effet surprenant agisse significativement. De préférence cette désorientation est d'au plus 10°, mieux d'au plus 5°. De même on peut accepter jusqu'à 20° de désorientation α entre les axes [001] ou [010] et respectivement DL ou DT, pour que l'effet surprenant agisse significativement. De préférence cette désorientation α est d'au plus 10°, mieux d'au plus 5°.

La magnétostriction apparente pour une induction maximale de 1,2 T, notée λₛ^{1,2T}, est inférieure à 5 ppm, de préférence inférieure à 3 ppm, de préférence à 1 ppm, lorsque la mesure est réalisée sur un échantillon rectangulaire allongé (du type d'un cadre Epstein ou typiquement d'une plaque de 100 x 10 mm²), le champ étant appliqué selon la direction « long » de l'échantillon (autrement dit la direction des grands côtés du rectangle formé par l'échantillon) et cette direction étant parallèle à la direction de laminage DL.

Egalement, la magnétostriction apparente pour une induction maximale de 1,2 T, notée λₛ^{1,2T}, est inférieure à 5 ppm, de préférence inférieure à 3 ppm, de préférence à 1 ppm, lorsque la mesure est réalisée sur un échantillon rectangulaire allongé (du type d'un cadre Epstein ou typiquement d'une plaque de 100 x 10 mm²), le champ étant appliqué selon la direction « long » de l'échantillon et cette direction étant parallèle à la direction travers DT qui est la direction perpendiculaire à la direction de laminage DL et située dans le plan de laminage.

Enfin, la magnétostriction apparente pour une induction maximale de 1,2 T, notée λₛ^{1,2T}, est inférieure à 10 ppm, de préférence inférieure à 8 ppm, de préférence à 6 ppm, lorsque la mesure est réalisée sur un échantillon rectangulaire allongé (du type d'un cadre Epstein ou typiquement d'une plaque de 100 x 10 mm²), le champ étant appliqué selon la direction « long » de l'échantillon et cette direction étant parallèle à la direction intermédiaire à 45° de la direction de laminage DL et de la direction travers DT et située dans le même plan que DL et DT.

80% au moins des grains, comptés en volume ou en surface, ce qui revient au même, sont d'orientation « cube » {100}<001> avec un maximum de désorientation moyenne ω de la distribution des orientations cristallographiques de 20° par rapport à l'orientation idéale {100}<001>. Il doit être compris que ω est plus précisément la moyenne des trois désorientations de la composante de texture CUBE, mesurées chacune autour de DL, DT ou DN.

La rémanence magnétique Bᵣ du circuit magnétique est réglable à une valeur plus ou moins basse par le biais des différents entrefers répartis entre les pièces découpées : soit un entrefer résiduel, c'est-à-dire ne résultant que de la découpe et de la mise bord à bord des éléments du noyau (dans ce cas, il peut être de l'ordre de 1 ou quelques µm), soit, de préférence, contrôlé (par exemple au moyen de cales) aussi bien entre les éléments empilés (dans la direction DN donc) qu'entre les bords d'éléments assemblés en E + I, E + E, C + C, C + I ..., donc dans leurs plans de laminage. Des exemples précis de configurations de pièces magnétiques (empilées en alterné total, partiel ou pas du tout) et de valeurs d'entrefer sont données plus avant dans le texte.

Concernant les dénominations des divers entrefers dont il est question, il faut préciser ce qui suit.

On prend comme repère de référence (voir les figures 7, 8 et 10) les axes naturels de symétrie d'un noyau de transformateur composé d'éléments en E, I ou C, à savoir :
- l'axe X parallèle aux jambes des E ou des C, et qui correspond à la direction de laminage DL ;
- l'axe Y parallèle aux dos des E ou des C et aux directions principales des I et qui correspond à la direction DT perpendiculaire à DL ;
- l'axe Z normal aux plans des feuilles découpées en E, I ou C et définissant un repère orthogonal avec les axes X et Y.

Le « plan du noyau de transformateur » est défini par le plan contenant les axes X et Y.

Il doit être entendu que, dans le raisonnement précédent, on pourrait très bien intervertir DT et DL en les faisant correspondre à X et Y respectivement, comme cela est d'ailleurs indiqué sur la planche de dessins 1 où deux repères correspondant à chacun de ces raisonnements sont présentés.

Les zones d'entrefer sont des volumes, s'appuyant sur des surfaces en regard qui délimitent chacune une pièce en E, I, C... Ces volumes d'entrefer sont de formes très minces puisque leur épaisseur est à proprement parler « l'entrefer », à savoir la distance séparant les deux surfaces en regard.

Le ou les entrefers ε sont définis en s'appuyant sur des surfaces de base X-Z ou Y-Z qui sont les sections droites terminales (aux extrémités) des pièces magnétiques découpées en E, I ou C du transformateur. L'entrefer ε est donc la mesure de l'écartement moyen, selon respectivement les axes Y ou X, entre les deux surfaces en regard aux extrémités de deux pièces. Ces entrefers ε peuvent prendre deux valeurs différentes ε₁ et ε₂ dans le cas de l'utilisation (non obligatoire) de deux matériaux différents dans le noyau comme on l'a dit. Typiquement, ces entrefers ε vont d'une épaisseur «résiduelle (quelques µm) à une épaisseur contrôlée par l'interposition de cales ou de feuilles non magnétiques de l'ordre de quelques dizaines à quelques centaines de µm, voire de l'ordre du mm.

Le ou les entrefers δ sont définis en s'appuyant sur des surfaces de base X-Y qui sont les surfaces principales de pièces magnétiques découpées en E, I ou C du transformateur, et un entrefer δ est donc la mesure de l'écartement moyen entre deux surfaces en regard, à l'intérieur des empilements ou entre deux empilements, donc selon la direction Z. Ces entrefers δ sont produits par l'interposition d'un matériau plan non magnétique entre des pièces découpées en E, I, C par exemple, ou entre des empilements de telles pièces découpées. Ces pièces ou ces empilements de pièces peuvent ou non être disposés tête-bêche. Un entrefer δ peut prendre une valeur δ₁ entre deux pièces découpées d'un même empilement de pièces découpées de mêmes forme, dimensions et orientation, et une valeur δ₂ entre deux empilements superposés de pièces découpées de formes et/ou d'orientations différentes. On peut jouer sur cette éventuelle différence entre δ1 et δ2 pour réduire l'induction rémanente Bᵣ. Les valeurs de δ sont typiquement dans les mêmes ordres de grandeur que celles de ε.

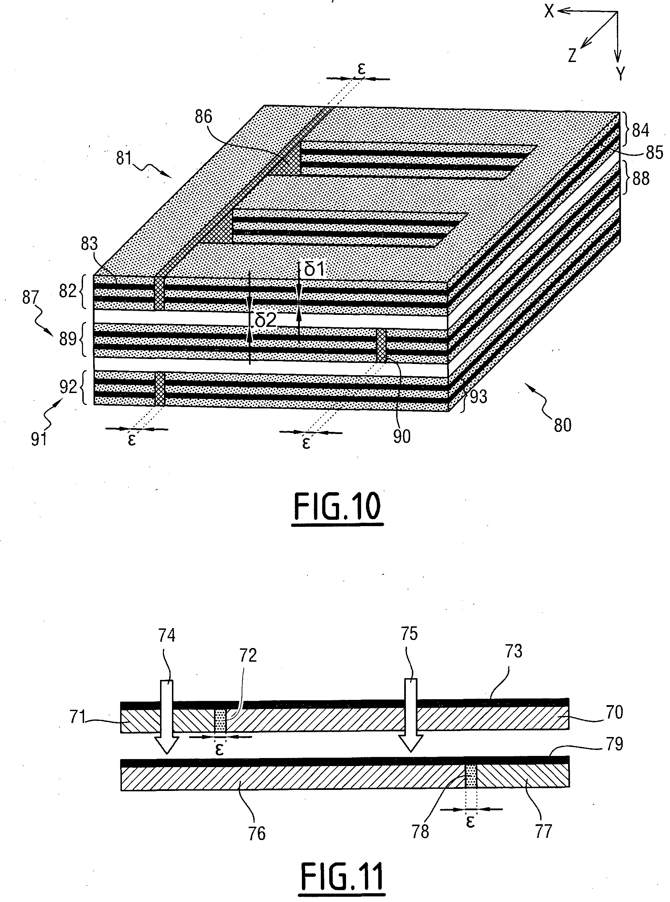

Les entrefers ε, δ₁ et δ₂ sont mis en évidence sur la figure 10.

Il peut aussi être intéressant de moduler les valeurs des entrefers δ selon qu'on se trouve dans le matériau principal à basse magnétostriction du noyau ou qu'on se trouve dans le matériau optionnel à haute Jₛ.

Les exemples ci-après 1 à 5 et 7 à 9, et aussi les exemples 13, 17, 20, 23, 27 sont réalisés entièrement à partir de tôles découpées en une seule pièce en forme de huit. Dans ce cas il n'y a qu'une possibilité pour l'empilement des pièces en huit les unes sur les autres. Les seules modifications qui pourraient être apportées au circuit magnétique une fois que le nombre de pièces en huit désiré est réalisé, sont l'introduction ou non d'un entrefer substantiel du type des entrefers δ précédemment décrits (au moyen de cales, de feuilles non magnétiques intercalaires...) entre toutes les pièces en huit ou certaines d'entre elles.

Bien que ce ne soit pas rapporté dans le tableau 3 ci-après, les inventeurs ont essayé d'ajouter des entrefers entre toutes ou certaines des pièces en huit : les résultats des exemples précités n'ont absolument pas changé. Le non-intérêt des solutions à pièces en huit, ayant au moins 50% des pièces découpées en une seule pièce en huit mais sans entrefer de type ε, mis en évidence ci-après à partir des résultats rapportés dans le tableau 3 ci-dessous, vaut donc tout autant pour ces mêmes exemples s'ils avaient utilisé des cales d'entrefer de type δ entre les pièces en huit. Un entrefer n'est efficace sur des noyaux magnétiques en forme générale de huit selon l'invention que s'il divise le huit en deux blocs en E, un bloc en E et un bloc en I, deux blocs en E formés chacun de deux blocs juxtaposés C, ou autres, se faisant face.

Dans certains cas d'exemples ci-dessous (tableaux 3, 4 et 5) utilisant des pièces découpées en E ou en E + I ou en E formé de deux C accolés (exemples 6, 10-12B, 14-16, 18, 18bis, 18ter, 19, 21, 22, 24-26), celles-ci sont superposées selon une configuration 1 dite « série » : ici les E, I ou C sont toujours superposés selon un E, I ou C, ce qui donne, à la fin, des sous-circuits magnétiques formés d'empilements en E, ou en I, ou en C, qui sont mis face à face avec un entrefer ε, au moins résiduel, entre ces deux parties ; cela correspond aux cas représentés sur les figures 7 et 8 ; on peut insérer entre les empilements en E, I ou C se faisant face une cale, dont l'épaisseur est notée ε dans le tableau 3 ci-après des exemples et références et qui définit la largeur de l'entrefer entre ces empilements ; dans les exemples ci-après, aucune telle cale n'a été insérée à l'intérieur de chaque empilement en E, I ou C, et les entrefers entre feuilles à l'intérieur de ces empilements restent résiduels (typiquement quelques µm). Tous les exemples du tableau 3 présentent cette configuration « série ».

Dans certains exemples des tableaux 4 et 5, on utilise une configuration 2 dite en « parallèle » (notée // dans les tableaux 4 et 5) : ici les feuilles en E ou en I, ou en C, etc., s'empilent en ne se mettant pas forcément dans la même position que la feuille précédente de l'empilement : ainsi on rencontre au moins une alternance qui est « tête-bêche », cette expression ayant la signification vue à propos de la figure 3. Dans le cas des exemples du tableau 3, aucune cale d'entrefer n'a été placée entre les branches des E et les I appartenant à deux niveaux successifs d'un empilement : les entrefers correspondants restent donc résiduels.

Dans les tableaux 3, 4 et 5, les valeurs de bruit, indice d'inrush et de masse totale du noyau qui sont considérées comme au moins acceptables pour une mise en œuvre de l'invention dans le cas d'un transformateur de puissance triphasée de l'ordre de 46 kVA sont soulignées. Un exemple déclaré conforme à l'invention doit donc être acceptable sur ces trois points, étant donné qu'on a considéré qu'un bruit inférieur à 80 dB entrait dans cette catégorie, le maximum préféré de 55 dB s'appliquant à un transformateur embarqué particulièrement adapté à être installé dans le poste de pilotage lui-même. Pour être acceptables, l'indice d'inrush doit être inférieur à 0,8 et la masse totale doit être inférieure ou égale à 17 kg.

**Tableau 3 : Résultats des essais de diverses conceptions de noyaux (NB : les inductions Bᵣ sont mesurées sur le cycle d'hystérésis majeur à saturation)**

| Ex. | Config. | Matériau(x) et forme de découpe | Entrefers ε, ou ε1 et ε2 (µm) | ep1 (mm) | ep2 (mm) | Mat.1 | | Mat.2 | dΦ/dt (V) | Bruit (dB) | Indice Inrush | Masse (kg) | | | P-tri (kVA) | P-tri/M (kVA/kg) | Jₛ1 (T) | Jₛ2 (T) | Vol.% Mat1 / Mat2 |
|---|---|---|---|---|---|---|---|---|---|---|---|---|---|---|---|---|---|---|---|
| | | | | | | Bₜ (T) | Bᵣ (T) | Bₜ2 (T) | | | | Mat 1 | Mat 2 | Masse totale (kg) | | | | | |
| 1 Ref | En 8 | FeCo27 en 8 | | 40 | 0 | 2 | 0,95 | - | 231,6 | 108 | 2,57 | 8,0 | 0 | 8,0 | 46,14 | 5,72 | 2,38 | 0 | 0 |
| 2 Ref | En 8 | FeCo50V2 en 8 | | 40 | 0 | 2 | 1,30 | - | 231,6 | 117 | 2,95 | 6,4 | 0 | 6,4 | 46,14 | 7,22 | 2,35 | 0 | 0 |
| 3 Ref | En 8 | FeCo50V2 en 8 | | 53 | 0 | 1,5 | 0,96 | - | 230,2 | 100 | 1,62 | 8,4 | 0 | 8,4 | 45,85 | 3,61 | 2,35 | 0 | 0 |
| 4 Ref | En 8 | FeCo50V2 en 8 | | 80 | 0 | 1 | 0,65 | - | 231,6 | 82 | 0.30 | 12,7 | 0 | 12,7 | 46,14 | 3,61 | 2,35 | 0 | 0 |
| 5 Ref | En 8 | FeCo50V2 en 8 | | 265 | 0 | 0,3 | 0,195 | - | 230,2 | 65 | -1.56 | 42,2 | 0 | 42,2 | 45,85 | 1,09 | 2,35 | 0 | 0 |
| 6 Ref | Série | FeCo50V2 en 2xE + ε | 200 | 80 | 0 | 1 | 0 | - | 231,6 | 87 | -0.35 | 12,7 | 0 | 12,7 | 46,14 | 3,61 | 2,35 | 0 | 0 |
| 7 Ref | En 8 | FeSi3 NO en 8 | | 53 | 0 | 1,5 | 1,05 | - | 230,2 | 96 | 2,02 | 8,4 | 0 | M | 45,85 | 5,45 | 2,03 | 0 | 0 |
| 8 Ref | En 8 | FeSi3 NO en 8 | | 72,5 | 0 | 1,1 | 0,77 | - | 230,9 | 87 | 0,94 | 11,5 | 0 | 11.5 | 45,99 | 3,99 | 2,03 | 0 | 0 |
| 9 Ref | En 8 | FeSi3 NO en 8 | | 265 | 0 | 0,3 | 0,21 | - | 230,2 | 58 | -1.22 | 42,2 | 0 | 42,2 | 45,85 | 1,09 | 2,03 | 0 | 0 |
| 10 Ref | Série | FeSi3 NO en 2x E + ε | 50 | 72,5 | 0 | 1,1 | 0 | - | 230,9 | 90 | 0.17 | 11,5 | 0 | 11.5 | 45,99 | 3,99 | 2,03 | 0 | 0 |
| 11 Ref | Série | FeSi3 GO en 2xE + ε | 50 | 53 | 0 | 1,5 | 0 | - | 230,2 | 91 | 0,97 | 8,4 | 0 | 8,4 | 45,85 | 5,45 | 2,03 | 0 | 0 |
| 12 Ref | Série | FeSi3 GO en 2xE + ε | 50 | 72,5 | 0 | 1,1 | 0 | - | 230,9 | 82 | 0.17 | 11,5 | 0 | 11.5 | 45,99 | 3,99 | 2,03 | 0 | 0 |
| 12B Ref | Série | FeCo27 en 2xE + ε | 50 | 40 | 0 | 2 | 0,2 | - | 231,5 | 107 | 1,82 | 8,0 | 0 | 8,0 | 46,1 | 5,70 | 2,00 | 0 | 0 |
| 13 Ref | En 8 | FeNi50 non texturé, en 8 | | 72,5 | 0 | 1,1 | 0,8 | - | 230,9 | 75 | 1,40 | 12,0 | 0 | 12.0 | 45,99 | 3,84 | 1,60 | 0 | 0 |
| 14 Ref | Série | FeNi50 non texturé en 2xE + ε | 180 | 72,5 | 0 | 1,1 | 0,06 | - | 230,9 | 82 | 0.66 | 12,0 | 0 | 12.0 | 45,99 | 3,84 | 1,60 | 0 | 0 |
| 14B Ref | Série | FeNi50 non texturé en 2xE + □ | 180 | 114 | 0 | 0,7 | 0,035 | - | 231,0 | 54 | -0.17 | 18,8 | 0 | 18.8 | 46,02 | 2,44 | 1,60 | 0 | 0 |
| 15 Inv | Série | FeNi50 CUB ω=15° en 2x E + ε, | 180 | 72,5 | 0 | 1,1 | 0,06 | - | 230,9 | 62 | 0.66 | 12,0 | 0 | 12.0 | 45,99 | 3,84 | 1,60 | 0 | 0 |
| 16 Inv | Série | FeNi50 CUB ω=7° en 2xE + ε, | Res. | 72,5 | 0 | 1,1 | 0,06 | - | 230,9 | 55 | 0.66 | 12,0 | 0 | 12.0 | 45,99 | 3,84 | 1,60 | 0 | 0 |
| 17 Ref | En 8 | FeNi50 CUB ω=7° en 8 | | 72,5 | 0 | 1,1 | 1,4 | - | 230,9 | 47 | 1,40 | 12,0 | 0 | 12.0 | 45,99 | 3,84 | 1,60 | 0 | 0 |
| 18 Inv | Série | FeNi50 CUB ω=7° en 2xE + ε, | 200 | 79,5 | 0 | 1 | 0,05 | - | 230,2 | 44 | 0.45 | 13,1 | 0 | 13.1 | 45,85 | 3,50 | 1,60 | 0 | 0 |
| 19 Inv | Série | FeNi50 CUB ω=7° + FeSi N.O. en 2xE + ε, | 180 180 | 72 | 5 | 1,1 | 0,055 | 0,1 | 230,7 | 47 | 0.47 | 11,9 | 0,77 | 12,7 | 45,96 | 3,63 | 1,60 | 2,35 | 10,7 |
| 20 Ref | En 8 | FeNi50 CUB ω=7°, + FeSi NO, en 8 | | 71,6 | 10 | 1,1 | 1,45 | 0,1 | 230,9 | 48 | 1,58 | 11,8 | 1,54 | 13.4 | 46,00 | 3,44 | 1,60 | 2,35 | 19,8 |
| 21 Inv | Série | FeNi50 CUB ω=7° + FeCo, en 2xE + ε, | 200 200 | 61 | 6 | 1,3 | 0,065 | 0,1 | 231,3 | 49 | 0.78 | 10,1 | 0,99 | 11.1 | 46,08 | 4,16 | 1,60 | 2,35 | 14,3 |
| 22 Ref | Série | FeNi50 CUB ω=7° + FeCo, en 2xE + ε, | 200 200 | 57 | 6 | 1,39 | 0,07 | 0,1 | 231,1 | 49 | 0,93 | 9,4 | 0,99 | 10.4 | 46,04 | 4,42 | 1,60 | 2,35 | 15,1 |
| 23 Ref | En 8 | FeNi50 CUB ω=7° + FeCo, en 8 | | 57 | 5 | 1,39 | 1,45 | 0,1 | 230,8 | 49 | 2,24 | 9,4 | 0,83 | 10,2 | 45,98 | 4,49 | 1,60 | 2,35 | 12,8 |
| 24 Inv | Série | FeNi50 CUB ω=7° + FeCo, en 2xE + ε, | 200 200 | 71,6 | 10 | 1,1 | 0,055 | 0,1 | 230,9 | 51 | 0,31 | 11,8 | 1,65 | 13,5 | 46,00 | 3,41 | 1,60 | 2,35 | 19,8 |
| 25 Inv | Série | FeNi50 CUB ω=7° + FeCo, en 2xE + ε, | 300 200 | 56,7 | 10 | 1,39 | 0,07 | 0,1 | 231,1 | 51 | 0,74 | 9,4 | 1,65 | 11,0 | 46,03 | 4,18 | 1,60 | 2,35 | 23,4 |
| 26 Inv | Série | FeNi50 CUB ω=7° + FeCo, en 2xE + ε, | 300 200 | 53,8 | 15 | 1,4 | 0,07 | 0,3 | 231,1 | 54 | 0,61 | 8,9 | 2,48 | 11,4 | 46,03 | 4,05 | 1,60 | 2,35 | 33,1 |
| 27 Ref | En 8 | FeNi50 CUB ω=7° + FeCo, en 8 | | 50,2 | 15 | 1,5 | 1 | 0,3 | 231,0 | 59 | 1,44 | 8,3 | 2,48 | 10.8 | 46,02 | 4,27 | 1,60 | 2,35 | 34,5 |

On va, à présent, montrer que les configurations en E + I ou en C sont tout autant aptes à procurer les avantages de l'invention. En partant de l'exemple ci-dessus 18 en E + E + entrefer de type ε, on compare dans le tableau 4 les configurations en E + I (du type de la figure 4) également de type transformateur triphasé (conservation de la section) et celle en 2 x E avec E = 2C accolés (du type de la figure 6) de type transformateur monophasé (bobinage sur la jambe centrale). Ces exemples ne comportent pas de matériau 2 à haute Js, mais seulement le matériau 1 à basse magnétostriction.

Pour l'exemple 18 (E + E) triphasé la géométrie du circuit est fixée par les paramètres a, b et c, comme dans l'exemple de la figure 1 : a (largeur de branche de E et de dos du E) = 20 mm, b (intervalle entre branches du E) = 50mm, c (longueur des branches du E) = 60mm.

Pour l'exemple 18bis (E + I) triphasé la géométrie du circuit est fixée par les paramètres a, b et c, comme dans l'exemple de la figure 4 : a (largeur de branche de E ou de I ou de dos du E) = 20 mm, b (intervalle entre branche de E)= 50mm, c (longueur de branche de E) = 120 mm

Pour l'exemple 18ter (E = 2C + E = 2C) monophasé la géométrie du circuit est fixée par les paramètres a, b et c comme dans l'exemple de la figure 6 : a (largeur de branche du C) = 20 mm ce qui revient à constituer une jambe centrale du E = 2C de 2 x 20 = 40mm, b (intervalle entre les branches du C) = 50mm, c (longueur des branches du C) = 60mm.

Pour l'exemple 18quater (en E + I alternés) triphasé, le même matériau que pour 18bis est utilisé, mais en configuration d'empilements de E + I alternés à chaque couche, avec des entrefers résiduels aussi bien entre les E et les I, qu'entre chaque couche de E + I. Il s'agit donc d'une configuration en parallèle (//).

**Tableau 4 : Comparaisons entre les résultats de l'exemple 18 et de configurations qui en dérivent CUB = texture « cubique » {100}<001> ; ε = entrefer calibré ; P-tri : puissance apparente triphasée (V.A)**

| Ex. | Type de transformateur | Config | Matériau(x) et forme de découpe | Entrefer ε (µm) | ep1 (mm) | Mat.1 | | dΦ/dt (V) | Bruit (dB) | Indice Inrush | Masse (kg) | | P-tri (kVA) | P-tri/M (kVA/kg) | Js1 (T) | Js2 (T) |
|---|---|---|---|---|---|---|---|---|---|---|---|---|---|---|---|---|
| | | | | | | Bₜ (T) | Bᵣ (T) | | | | Mat 1 | Masse totale (kg) | | | | |
| 18 Inv | triphasé | Série | FeNi50 CUB ω=7° en 2 colonnes de E + ε | 200 | 79,5 | 1 | 0,05 | 230,18 | 44 | 0.45 | 13,1 | 13,1 | 45,85 | 3,49 | 1,60 | 0 |
| 18bis Inv | Triphasé | Série | FeNi50 CUB ω=7° en colonne E+ colonne I + ε | 200 | 79,5 | 1 | 0,05 | 230,18 | 43,5 | 0.45 | 13,1 | 13,1 | 45,85 | 3,49 | 1,60 | 0 |
| 18ter Inv | monophasé | Série | FeNi50 CUB ω=7° en 2x(E=2 colonnes deC) + ε | 200 | 79,5 | 1 | 0,05 | 460,3 | 44,5 | 0.45 | 26,3 | 126,3 | 53 | 2,02 | 1,60 | 0 |
| 18quater Inv | Triphasé | // | FeNi50 CUB ω = 7° en E+I alternés + ε résiduel | résidu el | 86,5 | 0,92 | 0,55 | 230,41 | 49 | 0,79 | 14,3 | 14,3 | 45,89 | 3,21 | 1,60 | 0 |

On voit que les exemples 18bis et 18ter ont des performances tout à fait comparables à celles de l'exemple 18, et qui sont, comme les siennes, conformes à l'invention. L'exemple 18ter conduit à un alourdissement du noyau, mais qui reste cependant acceptable.

Pour l'exemple 18quater, il résulte de sa configuration une induction rémanente Br du cycle d'hystérésis majeur de 0,8 T, et si on veut alors réduire l'inrush jusqu'à la limite admissible (0,8), alors il faut baisser l'induction Bₜ en régime nominal à 0,8 T et aussi accroître la section de matériau afin de conserver la tension secondaire délivrée et la puissance apparente transformée. Il en résulte une augmentation de masse du noyau magnétique jusqu'à 16,5 kg, ce qui est encore admissible, alors que le bruit émis est largement en dessous du seuil toléré. On voit donc que même avec une valeur de Bᵣ assez élevée et au prix d'un alourdissement acceptable de quelques kg, on peut encore bénéficier de l'invention avec un bruit émis faible et un indice d'Inrush acceptable. On voit cependant qu'il est intéressant, pour minimiser la masse, de chercher à réduire le Bᵣ du noyau magnétique : les exemples ci-après montrent différentes voies en ce sens.

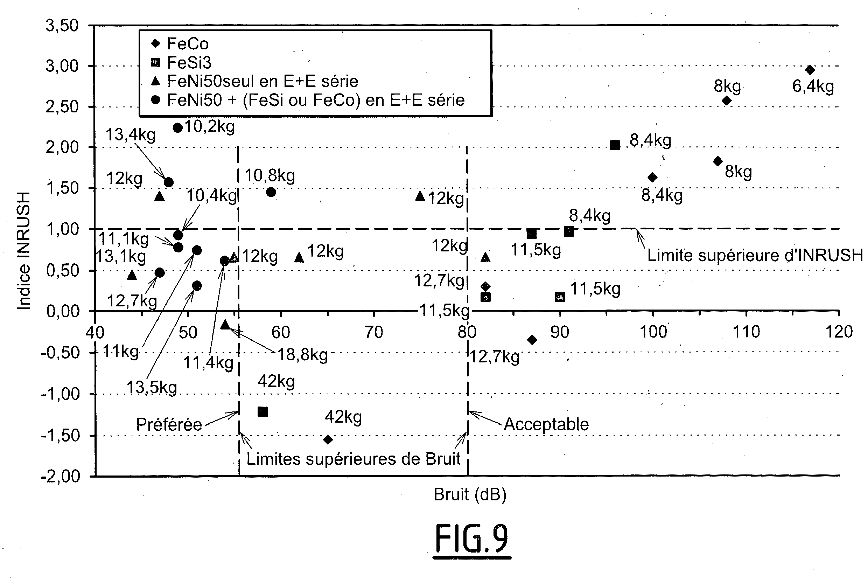

La figure 9 montre un diagramme dans lequel les différents exemples du tableau 3 sont situés. En abscisses figure le bruit émis par le transformateur, et en ordonnées figure l'indice d'inrush. Des lignes en pointillés délimitent les domaines de bruit et d'inrush correspondant aux objectifs (impératif et préféré concernant le bruit) visés par l'invention. On a également reporté les masses des noyaux correspondants, et repéré les matériaux de façons différentes.

L'analyse des résultats permet de parvenir aux conclusions suivantes.

L'utilisation exclusive des alliages habituels, non texturés ou texturés, utilisés dans les transformateurs embarqués, à savoir les alliages FeCo à 27% de Co ou à 50% de Co et 2% de V, ou les aciers électriques Fe-3%Si N.O. ou G.O., provoque un bruit très important si l'induction de travail est élevée (Bₜ du premier matériau supérieure à 1 T, typiquement), alors que la masse de circuit magnétique est faible (exemples 1 à 3). Ce n'est qu'avec une induction de travail de 1 T (exemple 4) que l'effet d'inrush s'affaiblit (il est de 1,3), sans pour autant parvenir à respecter le cahier des charges d'un indice d'inrush de 0,8 au maximum. Les niveaux de bruit atteints dans les exemples 1 à 3 (100 à 117 dB) sont rédhibitoires, pour toute utilisation embarquée nécessitant un échange de paroles entre personnes, sans l'aide d'un matériel technique (à savoir les micros et casques équipant les postes de pilotage actuels). Le niveau de bruit de l'exemple 4, quoique plus réduit (82 dB), demeure encore au-dessus du seuil acceptable de 80 dB pour une utilisation embarquée.

Pour atteindre des niveaux de magnétostriction plus faibles, il reste, dans ce cas de configuration et pour ces choix du matériau, seulement à réduire encore l'induction de travail. Cela est montré dans l'exemple 5 où en abaissant l'induction de travail à 0,3 T, un niveau de bruit pouvant être acceptable est obtenu (65 dB contre 55 dB optimalement recherché), mais la masse du circuit magnétique a plus que triplé (42 kg), ce qui est également rédhibitoire en aéronautique. Cette solution n'est donc pas satisfaisante.

Tous les exemples de référence 1 à 5 utilisent une configuration de circuit avec des feuilles superposées découpées en 8, sans entrefer. Le passage à une structure découpée en double E conformément à la figure 1 avec un entrefer calibré de 200 µm de l'exemple de référence 6 permet de réduire encore l'effet d'inrush par rapport à l'exemple 4, mais le bruit est quelque peu dégradé. Cette modification, à elle seule, ne rend donc pas plus acceptable le circuit magnétique en alliage FeCo dans un « transformateur bas bruit ».

D'autre part, l'emploi d'acier électrique Fe-3%Si Non Orienté (N.O., c'est-à-dire sans texture marquée autre que celle résultant, de façon subie, de la gamme de laminage et de recuit nécessaire pour atteindre l'épaisseur finale) amène des résultats très similaires à ceux des exemples utilisant les alliages FeCo27. Les exemples de référence 7, 8 et 9, à découpe en huit sans entrefer, montrent que, par une réduction progressive de l'induction de travail Bₜ, le circuit magnétique passe d'une masse faible (exemple 7 : 8,4 kg) et bruyante (96 dB) à fort effet d'inrush (indice > 2) à (exemple 9) une masse très forte pour Bₜ = 0,3 T (42 kg) avec un bruit émis relativement faible et presque à la limite de l'optimal admissible (58 dB) et un effet d'inrush très bas (< 0). Que ce soit en raison du bruit important ou de leur masse importante imposée par la nécessité de travailler à une faible induction Bt pour obtenir de bas bruit et inrush, ces exemples ne peuvent être satisfaisants pour l'application « transformateur embarqué bas bruit ».

La comparaison des exemples de référence 8 et 10 présente l'effet d'une découpe en double E. Comme dans les exemples utilisant du FeCo, ce mode de découpe améliore l'effet d'inrush mais dégrade le bruit émis. Cela ne change pas les conclusions sur l'impossibilité d'appliquer le FeSi3 N.O. à un circuit magnétique de transformateur embarqué à bas bruit.

Les exemples de référence 11 et 12 décrivent l'utilisation d'acier électrique à 3% de Si et à grains orientés (FeSi3 G.O.) dans une structure en double E avec entrefer calibré de 50 µm, pour des inductions moyennes de 1 et 1,5 T, permettant de conserver une faible masse embarquée (8-12 kg). Pourtant, l'emploi d'un tel type de texture, dite de Goss {110}<001>, n'améliore que peu le bruit émis : voir la comparaison des exemples 10 (N.O.) et 12 (G.O.), avec une réduction du bruit de seulement 8 dB. Cela ne permet pas d'atteindre une masse réduite à faible bruit émis. On voit donc ici qu'un matériau texturé quelconque n'est pas nécessairement intéressant à lui seul pour réduire significativement le bruit émis par un circuit magnétique découpé, même si la structure comporte un entrefer.

Les exemples 12 et 12 B ont la même configuration de noyau magnétique faite de deux empilements de pièces découpées en E se faisant face, séparés par un même entrefer calibré de 50 µm. Ces deux exemples permettent de comparer l'utilisation de deux matériaux différents, comme ils sont tous deux monomatériaux. Pour l'exemple 12, on utilise un matériau FeSi3% G.O. (à grains orientés) réputé pour sa très basse magnétostriction selon DL et sa grande magnétostriction selon DT : il en résulte que pour un transformateur ayant deux directions principales orthogonales du flux magnétique dans le plan des pièces en E, en C ou en I, les déformations de magnétostriction seront élevées et qu'on ne pourra les réduire qu'en réduisant le niveau d'induction. C'est ce qui est fait dans l'exemple 12 avec une valeur Bt = 1,1 T (55% de Js) tandis qu'une basse valeur de rémanence Br est assurée par la cale d'entrefer, soit Br = 0,1 T. Même à ce niveau d'induction de travail réduit de 1,1 T, le bruit reste encore assez fort (82 dB), mais toutefois significativement réduit de 9 dB par rapport à l'exemple 11. En revanche la valeur basse de Br et la valeur élevée de Js, permettent un coefficient d'Inrush bas, et seraient compatibles avec le cahier des charges du transformateur. La masse résultante de 11,5 kg est admissible par l'application, du fait de la réduction drastique d'induction de travail Bt qu'il a fallu compenser par un accroissement dans les mêmes proportions de la section du noyau, afin de maintenir la puissance électrique transformée. Le bruit trop élevé (27dB de trop par rapport à la limite supérieure préférée et 2 dB de trop par rapport à la limite supérieure acceptable) rend toutefois cet exemple non conforme au cahier des charges, même dans sa variante la moins exigeante pour le bruit de magnétostriction.

L'exemple 12B remplace le FeSi3% G.O. par un alliage Fe-Co 27% connu pour être l'alliage magnétique ayant la plus haute aimantation à saturation (2,38 T), les alliages FeCo magnétiquement doux étant historiquement ceux qui sont utilisés en électrotechnique embarquée pour réduire les masses des machines électriques. En testant l'exemple 12B on cherche alors logiquement à réduire significativement la masse embarquée, afin d'observer les conséquences sur l'Inrush et le bruit comparativement à la solution Fe3%SiG.O. de l'exemple 12. En portant l'induction de travail à 2 T, tout en conservant une basse induction rémanente (0,2 T) par des cales d'entrefer et une disposition en série, on réussit à baisser considérablement la masse du noyau magnétique à 8 kg, qui est la masse la plus basse de tous les exemples et contre-exemples de ces expériences. En revanche le bruit de magnétostriction remonte tout aussi considérablement, et passe au-dessus de 100 dB. Les alliages FeCo traditionnels sont effectivement connus pour leurs forts coefficients de magnétostriction vraie λ₁₀₀ et λ₁₁₁, tout autant que pour leurs forts coefficients de magnétostriction apparente. Le coefficient d'Inrush remonte également sensiblement à des valeurs beaucoup trop élevées pour le transformateur, ce qui est le résultat de l'induction de travail Bt très proche de l'aimantation à saturation (conformément à la formule de l'inrush).

On voit donc par ces deux exemples 12 et 12B que l'emploi de matériaux à forte aimantation à saturation avec de fortes valeurs d'induction de travail Bt, et même avec un entrefer calibré, ne permet pas d'atteindre les niveaux d'inrush et de bruit souhaité. Une réduction très forte de Bt permettrait d'y arriver, mais au prix d'un accroissement de la masse embarquée important et qui ne serait pas admissible. Ces exemples 12 et 12B ne parviennent donc pas à résoudre le problème exposé dans les transformateurs aéronautiques.

Les exemples 13 à 18 permettent d'évaluer les avantages d'un des éléments de l'invention, à savoir l'utilisation d'un alliage austénitique Fe-Ni typiquement à 50% en poids de Ni, à saturation élevée et à texture cube {100}<001>. Dans ces exemples, il est utilisé seul pour réaliser le circuit magnétique, c'est-à-dire sans qu'une structure à matériau à haute Js lui soit accolée.

Les exemples 13 (noyau en huit) et 14 (noyau en double E) ne sont pas des exemples selon l'invention, car le matériau considéré (Fe-50%Ni) n'a, dans leur cas, pas de texture marquée. On constate, de fait, que le bruit émis reste relativement élevé (75 et 82 dB), loin de la valeur optimale maximale visée (55 dB) et pas toujours conforme à la valeur maximale tolérable (80 dB), pour une induction de travail Bₜ moyenne de 1,1 T et une masse de culasse magnétique de 12 kg. L'exemple 13, dont le bruit est de 75 dB, pourrait être acoustiquement acceptable pour un transformateur placé hors du poste de pilotage, mais son indice d'inrush est trop élevé (1,7). C'est l'inverse pour l'exemple 14 : l'indice d'inrush est bon (0,655), mais le bruit est trop élevé (82 dB). Il ne peut donc être envisagé de réaliser avec un tel matériau un circuit magnétique de transformateur répondant en tous points au cahier des charges fixé.

L'exemple 14B a une configuration comparable à celle de l'exemple 14, mais il requiert une masse de Fe-50%Ni non texturé supérieure, et est utilisé avec une induction de travail Bt moindre. Ces modifications conduisent à un alourdissement du noyau qui commence à être excessif, et qui va de pair avec une diminution sensible de la puissance massique. Ainsi, bien que ses performances en bruit et inrush soient bonnes dans les conditions d'essai précisées, il ne constitue pas une solution satisfaisante aux problèmes posés.

Les exemples 15, 16 et 18 selon l'invention sont réalisés avec un alliage Fe50%Ni texturé {100}<001>. Il est étonnant de constater qu'à induction de travail Bₜ identique, l'introduction d'une telle texture permet de réduire significativement le bruit émis. A 15° de désorientation moyenne ω de la texture, le bruit a déjà sensiblement baissé pour descendre jusqu'à 62 dB, et il devient donc acceptable dans certaines utilisations, tandis que pour des désorientations trois fois plus faibles, le bruit émis devient, remarquablement, inférieur ou égal à la limite supérieure optimale de 55 dB. Cette désorientation moyenne ω de la texture peut être tolérable jusqu'à 20°, selon l'invention.

Par ailleurs l'effet d'inrush peut être réduit, par une découpe en E, à des niveaux acceptables (indice < 0,8) dans les exemples 15 et 16, tandis que la découpe en huit sans entrefer ε (exemple de référence 17) dégrade excessivement l'effet d'inrush. Ce dernier exemple montre que l'absence totale d'entrefer dans le plan de découpe des pièces profilées de transformateur, ne permet pas d'obtenir de façon suffisante un amortissement de l'effet d'inrush, à cause de la trop grande rémanence magnétique Bᵣ du circuit magnétique, malgré l'utilisation de FeNi50 à texture cube et à faible désorientation (7°).

On notera que l'exemple 16 présente des caractéristiques conformes aux exigences de l'invention, bien qu'il ne présente qu'un entrefer ε résiduel entre ses E.

Si on tire parti de ces résultats pour conserver la découpe favorable en double E avec un entrefer ε au moins résiduel, et qu'on limite un peu plus l'induction de travail pour abaisser encore l'indice d'inrush, on obtient une solution mono-alliage Fe50%Ni texturé qui est satisfaisante en termes de bruit, d'inrush et de masse réduite de circuit magnétique (dans l'exemple 18 elle est de 13,1 kg). On a ainsi découvert de façon surprenante qu'un alliage FeNi à 30-80% de Ni, optimalement à 40-60% de Ni, de texture cube suffisamment aiguë, bien qu'ayant des coefficients importants de magnétostriction vraie λ₁₀₀ et λ₁₁₁, pouvait réduire significativement le bruit émis par un transformateur dont le circuit magnétique est réalisé par découpe et superposition de plaques en E ou en huit. De plus on observe que les circuits en huit dépourvus d'entrefer au moins résiduel ne permettent pas, contrairement aux circuits en E, en I, en C, d'amortir de façon suffisante l'effet d'inrush. Ils sont donc exclus du champ de l'invention.

Les inventeurs ont voulu aussi préciser comment les entrefers permettent de réduire l'induction rémanente d'un circuit magnétique, alors même que le matériau qui le constitue présente intrinsèquement une induction rémanente élevée du fait de sa texture cube {100}<001>.

Les inventeurs présentent ci-après dans le tableau 5 des exemples précis qui dérivent de l'exemple 18bis du tableau 4, exemple qui est selon l'invention (et dont les caractéristiques sont rappelées en tête du tableau 5), en ce qu'ils utilisent des feuilles de FeNi50 cube ω = 7°, disposées en E + I et ne comportent pas de matériau à haute Js. Ces nouveaux exemples s'appuient sur les deux types de configurations « série » et « // » présentés auparavant avec différentes variantes, en utilisant toujours un E + un I à chaque niveau d'un empilement. Les entrefers ε entre E et I se faisant face (c'est-à-dire selon l'axe longitudinal des branches des E), δ1 entre deux E ou deux I successifs d'un même empilement et δ2 entre deux empilements successifs de E + I, sont précisés. Lorsqu'ils ne sont pas résiduels, ils sont obtenus à l'aide de cales d'épaisseur ε, δ1 ou δ2.

Pour tous les essais, Js est de 1,6 T puisque c'est celle du seul matériau utilisé pour composer le noyau. La puissance est de l'ordre de 46 kVA.

La figure 10 montre un exemple de configuration mixte du type de celle des exemples 14 à 17. Dans une telle configuration mixte, on rencontre des empilements dont les feuilles qui les composent sont chacune disposées en série, mais deux empilements successifs sont disposés en parallèle, autrement dit tête-bêche. « Rés. » signifie que l'entrefer ε ou δ1 concerné est résiduel. « - » à propos de δ2 signifie que cet entrefer n'existe pas dans la configuration concernée puisque ce n'est pas une configuration « mixte ».

**Tableau 5 : Influence des entrefers sur l'induction rémanente du circuit magnétique**

| Ex. | Configuration Des E+1 | ep1 (mm) | ε (µm) | δ1 (µm) | δ2 (µm) | Config | Bt (T) | Br (T) | Bruit (dB) | Inrush | Epaisseur matériau magnétique (mm) | Masse (kg) | Puissance Massique (kVA/kg) | Masse ramenée à un Transfo 46 kvA (kg) |
|---|---|---|---|---|---|---|---|---|---|---|---|---|---|---|
| 18bis Inv | 353 E empilés + 353 I empilés | 79,50 | 200 | Rés. | - | série | 1,00 | 0,050 | 43,5 | 0,450 | 79,50 | 13,10 | 3,49 | 13,1 |
| 18bis 2 | 5 E empilés + 5 I empilés | 1,00 | Res. | Res. | - | série | 1,01 | 0,190 | 44 | 0,603 | 1,00 | 0,16 | 3,51 | 13,1 |
| 18bis 3 | 10 E empilés + 10 I empilés | 2,05 | Res. | Res. | - | série | 1,00 | 0,185 | 44 | 0,585 | 2,00 | 0,33 | 3,49 | 13,1 |
| 18bis 4 | 15 E empilés + 15 I empilés | 3,08 | Res. | Res. | - | série | 1,00 | 0,175 | 43,5 | 0,575 | 3,00 | 0,49 | 3,49 | 13,1 |
| 18bis 5 | 5 E empilés + 5 I empilés + cale 83 µm entre E et I | 1,00 | 83 | Res. | - | série | 0,99 | 0,123 | 44,5 | 0,510 | 1,00 | 0,16 | 3,47 | 13,2 |
| 18bis 6 | 10 E empilés + 10 I empilés + cale 83 µm entre E et I | 2,05 | 83 | Res. | - | série | 0,99 | 0,028 | 43 | 0,401 | 2,00 | 0,33 | 3,44 | 13,3 |
| 18bis 7 | 5 E empilés + 5 I empilés + cale 190 µm entre E et I | 1,00 | 190 | Res. | - | série | 0,97 | 0,031 | 44 | 0,377 | 1,00 | 0,16 | 3,40 | 13,5 |
| 18bis 8 | 10 E empilés + 10 I empilés + cale 190 µm entre E et I | 2,05 | 190 | Res. | - | série | 0,98 | 0,029 | 44 | 0,389 | 2,00 | 0,33 | 3,42 | 13,4 |
| 18bis 9 | 5 E empilés + 5 I empilés + cales 83 µm entre couches | 1,35 | Res. | 83 | - | série | 0,86 | 0,106 | 41 | 0,225 | 1,00 | 0,16 | 3,00 | 15,3 |
| 18bis 10 | 5 E et 5 I alternés | 1,00 | Res. | Res. | - | // | 1,01 | 0,823 | 45 | 1,236 | 1,00 | 0,16 | 3,51 | 13,1 |
| 18bis 11 | 10 E et 10 I alternés | 2,05 | Res. | Res. | - | // | 0,99 | 0,861 | 44 | 1,234 | 2,00 | 0,33 | 3,44 | 13,3 |
| 18bis 12 | 10 E et 10 I alternés + cales 83 µm entre couches | 2,80 | Res. | 83 | - | // | 0,79 | 0,620 | 40 | 0,605 | 2,00 | 0,33 | 2,77 | 16,6 |
| 18bis 13 | 5 E et 5 I alternés + cale 83 µm entre E et I | 1,35 | 83 | Res. | - | // | 1,00 | 0,602 | 43,5 | 1,002 | 1,00 | 0,16 | 3,49 | 13,1 |
| 18bis 14 | 3 x (3 E empilés + 3 I empilés), alternés + cales 83 µm entre empilements | 1,97 | Res. | Res. | 83 | mixte | 0,98 | 0,567 | 43 | 0,927 | 1,80 | 0,30 | 3,42 | 13,4 |
| 18bis 15 | 3 x (3 E empilés + 3 I empilés), alternés + cales 166 µm entre empilements | 2,15 | Res. | Res. | 166 | mixte | 0,90 | 0,490 | 42 | 0,687 | 1,80 | 0,30 | 3,14 | 14,6 |
| 18bis 16 | 3 x (5 E empilés + 5 I empilés), alternés + cales 166 µm entre empilements | 3,35 | Res. | Res. | 166 | mixte | 0,95 | 0,552 | 43 | 0,847 | 3,00 | 0,49 | 3,31 | 13,9 |
| 18bis 17 | 3x (5 E empilés + 5 I empilés), alternés + cales 166 µm) entre empilements et cales 83 µm entre E et I | 3,35 | 83 | Res | 166 | mixte | 0,86 | 0,433 | 41 | 0,562 | 3,00 | 0,49 | 3,02 | 15,2 |
| 18bis 17b | 3 x (5 E empilés + 5 I empilés), alternés + cales 166 µm entre empilements et cales 83 µm entre E et I | 3,35 | 83 | Res | 166 | mixte | 0,98 | 0,433 | 41 | 0,79 | 3,00 | 0,49 | 3,42 | 13,4 |
| 18bis 18 | 5 E + 5 I alternés | 1,00 | Res. | Res. | - | // | 0,79 | 0,823 | 38 | 0,796 | 1,00 | 0,16 | 2,75 | 16,7 |
| 18bis19 | 10E + 10I alternés | 2,05 | Res. | Res. | - | // | 0,77 | 0,861 | 39 | 0,794 | 2,00 | 0,33 | 2,68 | 17,1 |

Ainsi, le matériau de l'exemple 18bis a été testé dans la même configuration que celle qui a permis d'obtenir les résultats du tableau 4, donc avec un seul empilement de 353 feuilles en E face à un seul empilement de 353 feuilles en I, mais avec un entrefer ε seulement résiduel entre les E et les I. Dans la configuration de type « série » des exemples 18bis 2, 5, 7, 9, cette hauteur de chaque empilement de E et de I est réduite à cinq feuilles superposées, et permet d'obtenir une très basse valeur d'induction rémanente Bᵣ, avoisinant 0,2 T ou encore moins. Les configurations des autres exemples de type « série » également 18bis 3, 6, 8 et 18bis 4" faisant seulement varier le nombre de couches (10 et 15 respectivement), montrent des résultats de Bᵣ très semblables à ceux de la configuration série à cinq feuilles par empilement : Bᵣ diminue lorsque le nombre de feuilles augmente, toutes choses étant égales par ailleurs.

Pour pouvoir comparer les différentes solutions 18bis2 à 18bis19 à l'exemple 18bis dont ils sont dérivés, on calcule la masse magnétique de chaque solution et la puissance massique (en kVA/kg) à partir de l'induction de travail Bt, puis on peut alors calculer la masse du transformateur correspondant à la même puissance (46 kVA) que celle de l'exemple 18bis. On constate bien sûr que les exemples 18bis2, 18bis3 et 18bis4 ont les mêmes densités de puissance et la même masse équivalente de culasse magnétique. Le bruit et l'indice d'Inrush sont également inchangés ou proches.

Dans les configurations série 18bis5 à 8, on fait varier la taille de l'entrefer ε entre les E et les I par une cale d'épaisseur 83 ou 190 µm, pour des noyaux magnétiques comportant des empilements de cinq ou dix feuilles superposées. Bᵣ atteint cette fois des valeurs basses (18bis5), ou même très basses s'approchant de 0 (18bis6 à 8). On voit donc que le mode « série » est très efficace pour réduire Bᵣ, en conjugaison avec un entrefer calibré entre les empilements de E et les empilements de I. Bᵣ est d'autant plus faible que ε est grand, et aussi que le nombre de couches est grand. Le bruit reste bas (40-45 dB) tandis que l'indice d'inrush se réduit encore sous l'effet du faible ou très faible Br.

Dans la configuration 18bis9 qui est aussi une configuration série, l'entrefer ε est résiduel entre les empilements de E et les empilements de I, mais cette fois c'est l'entrefer δ1 entre chaque E et chaque I qui n'est plus résiduel, grâce à une cale amagnétique d'épaisseur 83 µm interposée entre chaque feuille de chaque empilement. Là aussi, on réussit à obtenir une induction rémanente Bᵣ très basse, de l'ordre de 0,1 T, donc deux fois moins qu'avec des entrefers δ1 résiduels, à nombre de feuilles égal. La baisse de perméabilité globale engendrée par ce type d'entrefer réduit cependant l'induction de travail Bt et donc accroit la masse de noyau magnétique nécessaire au transfert de la puissance électrique : environ 15 kg, soit 2 kg de plus, mais en revanche cela permet de donner une cohésion mécanique au noyau magnétique par des cales d'entrefer amagnétique reliant le E et I d'une même couche, ce qui est recherché par les technologies de construction industrielle. Ainsi le noyau magnétique, présenté comme un empilement de N (5 dans 18bis9, 10 dans 18bis8) feuilles en E faisant face à un empilement de N feuilles en I peut retrouver, par le biais de cales amagnétiques à chaque niveau des empilements, une grande cohésion mécanique monobloc.

L'inconvénient de la configuration série est que le circuit magnétique est en deux parties distinctes qui doivent être maintenues assemblées en garantissant l'entrefer qui, selon l'invention, doit être présent à chaque niveau de chaque empilement (qu'il soit résiduel ou calibré par des cales), ce que les fabricants de transformateurs sont réticents à faire. Ceux-ci préfèrent de beaucoup la configuration « parallèle » car en alternant selon la direction de superposition de l'empilement, des E avec des I, on crée une cohésion mécanique forte du noyau magnétique par construction. C'est cette configuration qui est étudiée dans les exemples 18bis10 à 13 et 18,19.

Les configurations 18bis10 et 18bis11 sont comparables à ce qu'il est connu d'employer sur des transformateurs embarqués selon un mode « découpé-empilé », mais se distinguent des configurations connues, indépendamment du matériau texturé particulier utilisé, par la présence de l'entrefer ε. Cet entrefer ε y est résiduel aussi bien entre couches qu'entre les E et les I d'une même couche. L'induction rémanente Bᵣ est ici élevée (de l'ordre d'un peu plus de 0,8 T), ce qui va dégrader le facteur d'Inrush. Qu'il y ait cinq ou dix couches ne change pratiquement rien aux résultats. Mais ces exemples 18bis10 et 18bis11, lorsqu'ils sont utilisés à une induction de travail Bt de 1 T, ont, certes, un bruit bas (45 et 44 dB), mais aussi un indice d'inrush de l'ordre de 1,2, ce qui serait trop élevé pour être conforme à l'invention.

On verra cependant plus loin (exemples 18bis18 et 18bis19) que lorsque Bt est un peu abaissée, cette configuration peut donner des résultats d'inrush acceptables, et un bruit encore plus faible, au prix d'un alourdissement demeurant raisonnable, et que cette configuration peut donc être considérée comme relevant de l'invention lorsqu'elle est couplée aux matériaux particuliers utilisés, avec leurs textures orientées comme on l'a dit. L'introduction d'une cale procurant un δ1 de 83 µm entre chaque niveau de l'empilement de E + I (configuration 18bis12) réduit Bᵣ de 0,2 T, ce qui améliore assez significativement l'Inrush. Cette piste pourrait être poursuivie en augmentant encore l'épaisseur de la cale amagnétique : il faut atteindre une épaisseur de cale de, environ, 300 µm entre chaque couche pour que Bᵣ atteigne 0,2 à 0,3 T, niveau proche de ce qui est atteint sans entrefers δ1 avec la configuration « série ». Un possible problème est que rajouter une épaisseur amagnétique de 300 µm pour chaque épaisseur de feuille magnétique de l'ordre de 200 µm dans l'exemple présenté revient à accroitre de 150% le volume du transformateur, même si l'accroissement de masse correspondant peut demeurer très réduit (si on utilise des cales en plastique, par exemple). Cependant cette solution peut être utilisée si l'accroissement de volume du transformateur demeure acceptable. L'exemple 18bis13 montre qu'introduire un entrefer ε de 83 µm au lieu d'un entrefer δ1 de 83 µm en conservant une induction de travail Bt de 1 T ne permet pas d'avoir un inrush suffisamment bas. Il faudra donc, dans ce cas, réduire Bt, quitte à augmenter un peu la masse du noyau.

Les inventeurs ont découvert qu'une configuration de type « mixte », alternant des empilements de feuilles qui, pris isolément, sont disposés en mode « série », mais avec deux empilements successifs de mêmes formes et dimensions disposés l'un par rapport à l'autre en mode « parallèle » (c'est-à-dire avec deux empilements successifs placés tête bêche), comme représenté sur la figure 10, permettait d'avoir un bon compromis entre un volume de la culasse magnétique réduit et un Bᵣ faible. Cela est mis en évidence par les résultats obtenus sur les configurations 18bis14 à 17 du tableau 5. Elle représente aussi un bon compromis pour la cohésion de l'ensemble. Cette cohésion est moins forte que dans le cas d'une configuration en mode parallèle, mais elle est néanmoins suffisante pour qu'un dispositif de serrage ne soit pas indispensable.

Mais on peut même aller jusqu'à mettre des cales d'entrefer d'épaisseur δ1 entre les différentes feuilles d'un même empilement, avec comme conséquence une dégradation de la puissance volumique (tandis que la puissance massique restera forte). Sur la figure 10, on voit ainsi un noyau 80 comportant trois couches d'empilements superposées :
- une première couche 81 comportant un empilement 82 de trois feuilles en I, séparées chacune par des cales 83 d'épaisseur δ1, et un empilement 84 de trois feuilles en E séparées chacune par des cales 85 également d'épaisseur δ1, ces deux empilements 82, 84 se faisant face et étant séparés par une cale 86 d'épaisseur ε ;
- une deuxième couche 87 comportant un empilement 88 de trois feuilles en I séparées par des cales d'épaisseur δ1 et un empilement 89 de trois feuilles en E séparées par des cales également d'épaisseur δ1, ces deux empilements 88, 89 se faisant face et étant séparés par une cale 90 d'épaisseur ε, la deuxième couche 87 étant disposée tête-bêche par rapport à la première couche 81 ;

- une troisième couche 91 comportant un empilement 92 de trois feuilles en I séparées par des cales d'épaisseur δ1 et un empilement 93 de trois feuilles en E séparées par des cales également d'épaisseur δ1, ces deux empilements 92, 93 se faisant face et étant séparés par une cale 94 d'épaisseur ε, la troisième couche 91 étant disposée tête-bêche par rapport à la deuxième couche 87 et étant donc orientée de la même façon que la première couche 81 ;
- des cales d'entrefer d'épaisseur δ2 (éventuellement différente de δ1) entre les différentes couches 81, 87, 91.

Concernant les exemples 18bis18 et 18bis19, on en a déjà parlé à propos des exemples 18bis10 et 18bis11. Ils montrent que leur configuration en E et I alternés avec des entrefers résiduels peut donner des résultats au moins acceptables à tous points de vue, à une condition : que l'on travaille à une induction Bt pas trop élevée (0,8 T), un peu inférieure à ce qu'autorisent d'autres configurations plus avantageuses. C'est à cette condition, et au prix d'un alourdissement du transformateur à puissance égale qui demeure, cependant, tolérable, qu'on obtient un inrush conforme au cahier des charges fixé, dans sa variante la moins exigeante.

On voit d'après les résultats présentés dans les divers tableaux que tous les cas à densité massique de plus de 4 kVA/kg (donc très intéressants en termes d'allégement de l'avion) ont soit un bruit trop élevé soit un Inrush trop fort. Donc, tous les exemples intéressants de l'invention se situent, comme on peut le voir, à moins de 4,5 kVA/kg pour les inductions de travail Bt considérées (exemple 22 : 4,42 kVA/kg ; à noter que cet exemple est considéré comme un exemple de référence dans le tableau 3 du fait de son inrush trop élevé de 0,926 pour une induction de travail Bt de 1,39 T ; mais si on diminuait suffisamment Bt (0,92 T), comme pour l'exemple 18quater Inv du tableau 4, on tomberait sur un inrush convenable et une puissance massique de 3,2 kVA/kg). On peut noter que la puissance massique obtenue dans l'exemple 18quater Inv est la meilleure (la plus élevée) obtenue pour une configuration « parallèle » (//, donc une alternance tête bêche des couches) du noyau magnétique de transformateur et qui a donc sa propre cohésion mécanique sans masse rajoutée. Cette performance est à comparer au bien meilleur 4,15-4,2 kVA/kg de puissance massique qui est la meilleure performance obtenue en configuration « série » du noyau magnétique. Mais elle nécessite des cales et surtout un dispositif de maintien des parties libres du noyau magnétique.

On peut considérer que les exemples de l'invention sont tous potentiellement intéressants à partir du moment où, dans le cas de cet exemple précis d'exigences de transformateur, on est entre 3 et 4,5 kVA/kg de puissance massique. A noter qu'en fonction de l'exigence en bruit et en Inrush du transformateur, les solutions à privilégier pourront être différentes. A noter aussi que tous les exemples 1 à 18 correspondent à des structures en E + E (empilements se faisant face) correspondant à la figure 8, donc sans auto-cohésion mécanique, et nécessitent la surcharge d'une structure rigide maintenant précisément les deux empilements face à face, avec un entrefer contrôlé, résistant aux forces magnétiques. Si on se restreint alors aux structures « parallèle » ou « mixte » n'ayant pas cette surcharge, les meilleurs résultats globaux sont obtenus avec l'exemple 18bis17b dérivé du 18bis17, à 3,42 kVA/kg, ayant sa propre cohésion mécanique du fait de sa configuration mixte.

Les exemples 19 à 27 du tableau 3 illustrent les effets de l'introduction d'un deuxième matériau à haute aimantation à saturation Js aux côtés de l'alliage FeNi à texture cube précité. Ce deuxième matériau est du FeSi N.O. à 3% de Si ou du FeCo à 27% de Co. Cette introduction se traduit par une réduction de l'effet d'inrush et la masse supplémentaire introduite par la présence du deuxième matériau est en grande partie compensée par la ré-augmentation possible de l'induction de travail de l'alliage FeNi (par exemple on peut imposer Bₜ = 1,1 T au lieu de 1 T) puisque l'effet d'inrush n'est plus si élevé. On voit à nouveau que la simple découpe en huit, sans entrefer ε, accroit l'effet d'inrush de façon non satisfaisante (voir la comparaison entre les exemples 26 et 27). On voit aussi que des solutions utilisant deux matériaux complémentaires, accessibles et satisfaisantes en bruit et en inrush, donnent accès à des masses de culasse magnétique qui sont du même ordre que les exemples comportant un alliage FeNi seul, soit 12,7 à 14,5 kg, et sont donc suffisamment réduites pour être conformes au cahier des charges fixé.

Dans tous les exemples décrits dans le tableau 3 qui font usage de deux matériaux, l'un à faible magnétostriction et l'autre à haute aimantation à saturation Js, ces deux matériaux sont disposés dans des empilements successifs en mode « série ». il n'est cependant pas obligatoire de grouper les feuilles des deux matériaux selon deux entités homogènes bien distinctes l'une de l'autre. Il est envisageable de mettre des feuilles isolées ou des empilements de feuilles en matériau à haute Js entre des empilements de feuilles de matériau à basse magnétostriction. On peut même envisager que la feuille ou l'empilement de matériau à haute Js présente une forme différente de celle de l'empilement (ou des empilements) voisin(s) de feuilles en matériau à basse magnétostriction, pour former un noyau à configuration de type « parallèle » ou « mixte », dans lequel les différences de forme des éléments iraient de pair avec des différences de nature du matériau. On pourrait cumuler ainsi les avantages de basse induction rémanente, de bas bruit, de bonne cohésion mécanique et de faible masse liés aux différentes variantes de l'invention.

De manière générale, les valeurs de Bᵣ des configurations du tableau 5 sont basses, voire très basses, malgré la rectangularité du cycle d'hystérésis du matériau sans entrefer. Cette faible induction rémanente conduit, pour les meilleures configurations, à un indice d'inrush bas, indépendamment du champ appliqué.

Les mesures de B (80 A/m) sont très comparables pour tous ces essais, et montrent que dans tous les cas, pour ce type de champ appliqué relativement bas, on se trouve proche de la saturation.

Il apparaît clairement, au vu de la figure 9, qu'une structure de circuit magnétique de type découpé-empilé et comprenant des entrefers localisés et constituant un noyau magnétique à base (seul ou associé à un alliage à haute Js) d'alliage FeNi texturé « cubique » {100}<001> conduit, de façon surprenante, à la fois à un respect des limitations souhaitées en bruit et effet inrush et à une masse réduite de circuit magnétique. On rappelle que dans l'aéronautique, les limites admissibles en bruit, voire en Inrush, changent d'un transformateur à l'autre selon l'avion, la fonction exacte du transformateur dans l'avion, sa place dans l'avion, etc. On a fixé des limites admissibles pour l'indice d'inrush (0,8) et le bruit (80 dB ou, mieux, 55 dB) qui représentent des objectifs dont les conditions de satisfaction permettent de bien mettre en valeur les avantages des configurations selon l'invention, couplées à une masse de noyau relativement faible pour une puissance donnée.

Cet effet est surprenant en ce qu'il montre que, dans des conditions d'utilisation particulières, un alliage FeNi à valeurs élevées de magnétostriction vraie peut néanmoins être utilisé seul (ou éventuellement accompagné minoritairement d'un matériau à haute Js tel que FeCo ou FeSi) pour réaliser un circuit magnétique à faible bruit.

Il est aussi surprenant car, au vu du choix que proposait l'art antérieur entre, d'une part, 42 kg de circuit magnétique FeCo ou FeSi à bas bruit et bas inrush, et, d'autre part, 6-8 kg de circuit magnétique en FeCo dont le bruit et l'indice d'inrush ne sont pas admissibles, il était difficile de deviner qu'une solution exclusivement ou majoritairement à base de FeNi pourrait satisfaire à la fois les exigences de bruit et d'inrush avec un noyau magnétique dont la masse ne serait que de l'ordre de 10 à 17 kg voire moins. Cela était même d'autant plus difficile à deviner que l'utilisation d'un FeNi50 conventionnel (n'ayant pas de texture marquée et particulière) n'amène pas non plus aux réductions combinées recherchées en inrush, bruit et masse.

On a décrit le cas où on n'utilise qu'un seul matériau à texture cube. Mais on peut aussi employer simultanément plusieurs matériaux à texture cube, par exemple différents alliages FeNi austénitiques répondant aux conditions de composition précisées plus haut, pourvu qu'ils représentent, pris tous ensemble, une proportion volumique majoritaire du noyau magnétique. Ces matériaux différents peuvent être, au choix du constructeur, disposés dans chaque portion de noyau en E, C ou I chacun sous forme d'empilements d'épaisseurs définies d'éléments de même composition, ou être mélangés de façon aléatoire au sein de ladite portion. Ce qu'il faut, c'est que les parties du noyau d'un même niveau d'empilement se faisant face et étant séparées par un entrefer ε résiduel ou calibré aient le même arrangement en termes de choix du ou des matériaux, autrement dit qu'une feuille découpée, constituant un niveau d'un empilement, en un matériau donné se trouve toujours en face d'une pièce découpée du même matériau, constituant le niveau correspondant de l'autre empilement (quelle que soit la forme de la feuille constituant le niveau correspondant de l'autre empilement, qui peut être identique ou différente de celle de la feuille du même niveau du premier empilement dont a parlé).

Dans le même ordre d'idée on peut aussi utiliser des solutions de superposition des pièces découpées intermédiaires entre les empilements de E ou I ou C et les superpositions tête-bêche entre chaque couche (E + E, E + I ou C + I ou C + C...) successive. En effet on peut, par exemple assembler des empilements de faible épaisseur (typiquement quelques mm) comportant typiquement chacun une, quelques ou plusieurs (jusqu'à plusieurs dizaines) pièces découpées en forme de E ou I ou C, puis superposer tête-bêche ces empilements de faible épaisseur. Pour les configurations en E + E et en C + C, une superposition tête-bêche n'a évidemment de sens que si les E ou C d'une même couche ont des branches de longueurs différentes, sinon on retomberait sur une configuration en E + E ou C + C simple. Cela a l'avantage de rendre plus pratique de ménager un entrefer calibré entre deux couches successives d'empilements (par exemple 500 µm de largeur d'entrefer pour 1 ou 2 mm de hauteur d'empilement) tout en gardant l'avantage d'une bonne cohésion mécanique du noyau magnétique grâce à la superposition tête-bêche. Cette disposition a été auparavant décrite sous la dénomination de configuration « mixte » par différents exemples du tableau 5 et représentée sur la figure 10. Dans ce cas, il est très préférable, de plus, d'assurer un entrefer interplanaire calibré par une couche amagnétique disposée entre chaque couche de paquets de faible épaisseur empilés, sinon le flux magnétique court-circuite l'entrefer entre le E et le I en passant par les couches en dessus et en dessous, ce qui réduit significativement l'efficacité de l'entrefer par rapport à un entrefer seulement résiduel qui résulterait de la simple superposition des paquets. Cet entrefer interplanaire est typiquement de quelques dizaines à quelques centaines de µm (voir exemples précédents).

On voit dans le tableau 5 que certains exemples de configuration parallèle ou mixte présentent un indice d'inrush un peu trop élevé aux inductions de travail Bt testées de l'ordre de 1 T. Mais il suffirait, pour obtenir des résultats convenables avec les configurations de noyaux correspondantes, de travailler à des inductions Bt un peu plus basses, de l'ordre par exemple de 0,8 T comme cela a été le cas dans plusieurs exemples de ce tableau 5, pour obtenir des indices d'inrush inférieurs à 0,8 tout en ne nécessitant qu'un alourdissement tolérable du noyau de quelques kg.

En effet comme dit plus haut, si on s'en tient aux densités de puissance massique et si on élimine tous les cas ne respectant pas l'Inrush et le bruit, si de plus on considère que les surcharges des exemples «série» (E + E des exemples 1 à 18) dégradent leur densité de puissance en les rendant moins intéressants que les autres configurations, alors on s'aperçoit que les structures mixtes sont les plus intéressantes en densité de puissance (le maximum des exemples est à 3,42kVA/kg)

La figure 11 représente une telle configuration. On y voit en coupe transversale un premier empilement 70 de tôles découpées en E, accolées à un premier empilement 71 de tôles découpées en I, ces deux empilements 70, 71 étant séparés par un entrefer réalisé au moyen d'un matériau isolant non magnétique 72 d'épaisseur ε. L'ensemble ainsi formé est recouvert, sur sa face supérieure, par un isolant amagnétique 73. Cet ensemble, comme l'indiquent les flèches 74, 75, est placé, lors de l'assemblage du noyau, sur un deuxième ensemble similaire comportant un deuxième paquet de tôles découpées en E 76, accolé à un deuxième paquet de tôles découpées en I 77, ces deux paquets 76, 77 étant séparés par un entrefer ε réalisé au moyen d'un matériau isolant non magnétique 78, et l'ensemble étant revêtu sur sa surface supérieure par un isolant amagnétique 79. Les deux ensembles sont disposés tête-bêche, c'est-à-dire que le premier empilement 70 de tôles en E est superposé au deuxième empilement de tôles en I 77, et le premier empilement 71 de tôles en I est superposé au deuxième empilement de tôles en E 76. L'isolant 79 du deuxième paquet assure le calibrage de l'entrefer séparant les deux ensembles, et a l'épaisseur désignée par δ2 sur la figure 10 et dans la description qui précède.

On a décrit le cas où un seul deuxième matériau à haute Js était employé pour constituer le complément du noyau de transformateur selon l'invention conjointement à l'alliage ou aux alliages FeNi 30-80% à texture cube. Mais il serait concevable d'utiliser conjointement plusieurs tels matériaux à haute Js, par exemple un alliage Fe-3%Si texturé Goss et un alliage Fe-50%Co, en différentes proportions respectives. L'essentiel est que le FeNi 30-80% à texture cube demeure le matériau majoritaire en volume dans le noyau. Comme c'est le cas pour la portion majoritaire du noyau utilisant des feuilles en FeNi à texture cube, la répartition des différents matériaux à haute Js dans ledit complément peut être réalisée sous forme d'empilements de composition homogène ou d'empilements à répartition de composition aléatoire, pourvu que les deux parties du noyau soient identiques du point de vue de la composition des feuilles se faisant face dans un niveau d'empilement donné.

L'invention a été décrite et représentée pour le cas d'un transformateur triphasé à noyau en « E + E » ou « E + I » Mais elle serait aussi applicable au cas d'un transformateur monophasé dont le noyau serait en forme de « C + C » (figures 5 et 6) ou en forme de carré ou de rectangle dont chaque côté est formé par un empilement différent. La structure monophasée est d'ailleurs représentée dans l'exemple 18ter Inv (tableau 4), en considérant que, dans ce cas, le minimum de puissance massique appliqué à tous les exemples présents ne vaut pas pour la structure monophasée, bien connue pour être beaucoup moins efficace en puissance massique que les solutions triphasées.

La mise en place d'un revêtement isolant sur les faces des pièces découpées ou l'insertion de feuilles non magnétiques entre les pièces découpées permet de mieux contrôler la rémanence du circuit magnétique et le courant magnétisant du transformateur. Cela permet aussi d'accroitre les performances d'inrush, et de rendre plus reproductibles les transformateurs dans une production industrielle.

## Revendications

1. Noyau de transformateur électrique (49; 59), du type découpé-empilé, **caractérisé en ce qu'**il comporte deux empilements (53, 57; 60, 61) ou groupes d'empilements (70, 71 ; 82, 84, 88, 89, 92, 93), présentant chacun une première épaisseur (ep1), lesdits empilements (53, 57 ; 60, 61, 70, 71 ; 82, 84, 88, 89, 92, 93) étant constitués chacun d'une pièce plate unique ou de plusieurs pièces plates identiques isolées les unes des autres, dont les directions principales de découpe sont rectilignes et sont soit parallèles, soit perpendiculaires les unes aux autres, lesdits empilements (53, 57 ; 60, 61) ou groupes d'empilements (70, 71 ; 82, 84, 88, 89, 92, 93) se faisant face et comportant au moins un entrefer (ε) résiduel ou calibré de valeur maximale 10 mm entre eux, lesdites pièces plates étant en au moins un alliage FeNi austénitique contenant Ni = 30-80% en % pondéraux, de préférence Ni = 40-60% en % pondéraux, et au plus 10% en % pondéraux, de préférence au plus 2% en % pondéraux, d'éléments d'alliage et d'impuretés résultant de l'élaboration, le reste étant du fer, lesdites pièces plates présentant chacune un plan cristallographique (100), ledit alliage ayant une texture cube {100}<001> aiguë, dont au moins 80% des grains, de préférence au moins 95% des grains, s'écartent d'un angle (ω) égal à au plus 20° par rapport à l'orientation idéale {100}<001>, les deux directions principales de découpe desdites pièces plates étant sensiblement parallèles soit à la direction de laminage (DL), soit à la direction travers (DT) perpendiculaire à la direction de laminage (DL), ledit plan cristallographique (100) s'écartant d'au plus 20° par rapport au plan de laminage, de préférence au plus de 10°, mieux au plus de 5°, et les axes [001] ou [010] et respectivement la direction de laminage (DL) ou la direction travers (DT) s'écartant d'un angle (α) au plus égal à 20°, de préférence au plus égal à 10°, mieux au plus égal à 5°, lesdites pièces plates ayant des pertes magnétiques en ondes d'induction sinusoïdales issues du noyau magnétique, pour une induction maximale de 1 T, inférieures à 20 W/kg à 400 Hz, de préférence inférieures à 15 W/kg, et mieux, inférieures à 10 W/kg, la magnétostriction apparente pour une induction maximale de 1,2 T (λₛ^{1,2T}) étant inférieure à 5 ppm, de préférence inférieure à 3 ppm, de préférence à 1 ppm, lorsque la mesure est réalisée sur un échantillon rectangulaire allongé, le champ étant appliqué selon la direction du grand côté de l'échantillon et cette direction étant parallèle à la direction de laminage (DL), la magnétostriction apparente pour une induction maximale de 1,2 T (λₛ^{1,2T}) étant inférieure à 5 ppm, de préférence inférieure à 3 ppm, de préférence à 1 ppm, lorsque la mesure est réalisée sur un échantillon rectangulaire allongé, le champ étant appliqué selon la direction du grand côté de l'échantillon et cette direction étant parallèle à la direction travers (DT) perpendiculaire à la direction de laminage (DL) et située dans le plan de laminage, et la magnétostriction apparente pour une induction maximale de 1,2 T (λₛ^{1,2T}) étant inférieure à 10 ppm, de préférence inférieure à 8 ppm, de préférence à 6 ppm, lorsque la mesure est réalisée sur un échantillon rectangulaire allongé, le champ étant appliqué selon la direction long de l'échantillon et cette direction étant parallèle à la direction intermédiaire à 45° de la direction de laminage (DL) et de la direction travers (DT).

2. Noyau de transformateur selon la revendication 1, **caractérisé en ce que** lesdits empilements (53, 57 ; 60, 61) sont chacun en forme de C, de E ou de I.

3. Noyau de transformateur selon la revendication 2, **caractérisé en ce qu'**il est formé par deux sous-noyaux (60, 61) en forme de E se faisant face.

4. Noyau de transformateur selon la revendication 2, **caractérisé en ce qu'**il est formé par un empilement (21) de pièces plates en forme de E placées tête-bêche, les espaces vides entre les branches latérales (23, 24, 25) desdites pièces plates en forme de E étant remplis par des pièces plates (70, 71) en forme de I de mêmes composition et texture que celles des pièces plates en forme de E, des entrefers (ε) étant présents entre lesdites pièces plates en forme de E et lesdites pièces plates (70, 71) en forme de I.

5. Noyau de transformateur selon la revendication 2, **caractérisé en ce qu'**il est formé par un sous-noyau en forme de E (53) et un sous-noyau en forme de I (57) se faisant face.

6. Noyau de transformateur selon la revendication 2, **caractérisé en ce qu'**il est formé par deux sous-noyaux en forme de C (33, 34) se faisant face.

7. Noyau de transformateur selon la revendication 2, **caractérisé en ce qu'**il est formé par deux ensembles accolés de deux sous-noyaux en forme de C (42, 43), lesdits ensembles se faisant face.

8. Noyau de transformateur selon la revendication 1 ou 2, **caractérisé en ce qu'**il est formé par une succession de couches d'empilements, deux couches successives étant placées tête-bêche et séparées par un entrefer (δ2).

9. Noyau de transformateur selon l'une des revendications 1 à 8, **caractérisé en ce que** au moins un desdits empilements est constitué de plusieurs pièces plates de formes identiques séparées chacune par un entrefer (δ1).

10. Noyau de transformateur selon l'une des revendications 1 à 9, **caractérisé en ce que** lesdits éléments d'alliage sont choisis parmi l'un au moins parmi Cr, Si, Al, Zr, Mo, W, V, Nb, Cu, Mn.

11. Noyau de transformateur selon l'une des revendications 1 à 10, **caractérisé en ce que** lesdites pièces plates découpées présentent une symétrie.

12. Noyau de transformateur selon l'une des revendications 1 à 11, **caractérisé en ce que** la taille des grains desdites pièces est inférieure ou égale à 200 µm.

13. Noyau de transformateur (49 ; 53) selon l'une des revendications 1 à 12, **caractérisé en ce qu'**il comporte également des deuxièmes empilements de pièces plates, présentant une deuxième épaisseur (ep2), de même forme que les empilements présentant une première épaisseur (ep1) et superposés à eux, lesdites pièces plates des deuxièmes empilements étant en au moins un matériau présentant une aimantation à saturation (Js) supérieure ou égale à 2 T, lesdits deuxièmes empilements représentant moins de 50% du volume du noyau.

14. Noyau de transformateur (49 ; 53) selon la revendication 13, **caractérisé en ce que** lesdites pièces plates des deuxièmes empilements sont réalisées en au moins un matériau choisi parmi des alliages FeCo, des alliages FeCo(V, Ta, Cr, Si, X) avec X choisi parmi un ou davantage de Mo, Mn, Nb, Si, Al, des alliages FeCoSi, le fer doux, des aciers, des aciers inoxydables ferritiques contenant, en % pondéraux, 5-22% de Cr et 0 à 10% au total de Mo, Mn, Nb, Si, Al, V, des aciers électriques FeSiAl non orientés.

15. Noyau de transformateur (49 ; 53) selon l'une des revendications 13 ou 14, **caractérisé en ce que** l'entrefer (ε) entre deux empilements ou groupes d'empilements se faisant face présente une largeur différente entre les premiers empilements présentant une première épaisseur (ep1) et entre les deuxièmes empilements présentant une deuxième épaisseur (ep2).

16. Noyau de transformateur (49 ; 53) selon la revendication 15, **caractérisé en ce que** ledit entrefer (ε) a une largeur (ε1) comprise entre 2 et 1500 µm entre lesdits empilements présentant une première épaisseur (ep1) et une largeur (ε2) comprise entre 2 et 3000 µm entre lesdits empilements présentant une deuxième épaisseur (ep2).

17. Transformateur électrique monophasé ou triphasé comportant un noyau magnétique de type découpé-empilé, **caractérisé en ce que** ledit noyau magnétique est du type selon l'une des revendications 1 à 16.

18. Transformateur selon la revendication 17, **caractérisé en ce qu'**il s'agit d'un transformateur destiné à être embarqué dans un aéronef.

19. Transformateur selon la revendication 18, **caractérisé en ce qu'**il s'agit d'un transformateur destiné à être placé dans le poste de pilotage d'un aéronef.

## Patentansprüche

1. Elektrischer Transformatorkern (49; 59) vom Typ Schnitt-Stapel-Kern, **dadurch gekennzeichnet, dass** er zwei Stapel (53, 57; 60, 61) oder Gruppen von Stapeln (70, 71; 82, 84, 88, 89, 92, 93) umfasst, die jeweils eine erste Stärke (ep1) aufweisen, wobei die Stapel (53, 57; 60, 61, 70, 71, 82, 84, 88, 89, 92, 93) jeweils aus einem flachen Teil oder aus mehreren identischen, voneinander isolierten flachen Teilen bestehen, deren Hauptschnittrichtungen geradlinig sind und entweder parallel oder senkrecht zueinander sind, wobei die Stapel (53, 57; 60, 61) oder Gruppen von Stapeln (70, 71; 82, 84, 88, 89, 92, 93) einander gegenüber sind und mindestens einen restlichen oder kalibrierten Spalt (ε) mit einem Maximalwert von 10 mm untereinander aufweisen, wobei die flachen Teile aus mindestens einer austenitischen FeNi-Legierung sind, die Ni = 30-80 % in Gew.-%, vorzugsweise Ni = 40-60 % in Gew.-%, und höchstens 10 % in Gew.-%, vorzugsweise höchstens 2 % in Gew.-% an Legierungselementen und herstellungsbedingten Verunreinigungen enthält, wobei der Rest Eisen ist, wobei die flachen Teile jeweils eine kristallographische Ebene (100) aufweisen, wobei die Legierung eine spitze Würfeltextur {100}<001> aufweist, bei der mindestens 80 % der Körner, vorzugsweise mindestens 95 % der Körner, um einen Winkel (ω) gleich höchstens 20° in Bezug auf die ideale Ausrichtung {100}<001> abweichen, wobei die zwei Hauptrichtungen zum Schneiden der flachen Teile im Wesentlichen parallel entweder zu der Walzrichtung (DL) oder zu der Querrichtung (DT) senkrecht zu der Walzrichtung (DL) sind, wobei die kristallographische Ebene (100) um höchstens 20°, vorzugsweise um höchstens 10°, besser höchstens 5° von der Walzebene abweicht, und die Achsen [001] oder [010] und jeweils die Walzrichtung (DL) oder die Querrichtung (DT) um einen Winkel (α) von höchstens 20°, vorzugsweise höchstens 10°, besser höchstens 5°, abweichen, wobei die flachen Teile magnetische Verluste in sinusförmigen Induktionswellen aufweisen, die von dem Magnetkern ausgehen, für eine maximale Induktion von 1 T weniger als 20 W/kg bei 400 Hz, vorzugsweise weniger als 15 W/kg und besser weniger als 10 W/kg, wobei die scheinbare Magnetostriktion für eine maximale Induktion von 1,2 T (λₛ^{1,2T}) weniger als 5 ppm, vorzugsweise weniger als 3 ppm, vorzugsweise 1 ppm ist, wenn die Messung über eine längliche, rechteckige Probe durchgeführt wird, wobei das Feld in Richtung der langen Seite der Probe angelegt wird und diese Richtung parallel zu der Walzrichtung (DL) ist, die scheinbare Magnetostriktion bei einer maximalen Induktion von 1,2 T (λₛ^{1,2T}) weniger als 5 ppm, vorzugsweise weniger als 3 ppm, vorzugsweise 1 ppm ist, wenn die Messung über eine längliche rechteckige Probe durchgeführt wird, das Feld in Richtung der langen Seite der Probe angelegt wird und diese Richtung parallel zu der Querrichtung (DT) senkrecht zu der Walzrichtung (DL) und in der Walzebene ist, und die scheinbare Magnetostriktion für eine maximale Induktion von 1,2 T (λₛ^{1,2T}) weniger als 10 ppm, vorzugsweise weniger als 8 ppm, vorzugsweise 6 ppm ist, wenn die Messung über eine längliche rechteckige Probe durchgeführt wird, wobei das Feld in Längsrichtung der Probe angelegt wird und diese Richtung parallel zu der Zwischenrichtung unter 45° der Walzrichtung (DL) und der Querrichtung (DT) ist.

2. Transformatorkern nach Anspruch 1, **dadurch gekennzeichnet, dass** die Stapel (53, 57; 60, 61) jeweils in Form von C, E oder I sind.

3. Transformatorkern nach Anspruch 2, **dadurch gekennzeichnet, dass** er aus zwei einander Unterkernen (60, 61) in Form von E gebildet ist, die einander gegenüber sind.

4. Transformatorkern nach Anspruch 2, **dadurch gekennzeichnet, dass** er durch einen Stapel (21) aus umgekehrt angeordneten flachen Teilen in Form von E gebildet ist, wobei die Leerräume zwischen den Seitenschenkeln (23, 24, 25) der flachen Teile i Form von E durch flache Teile (70, 71) in Form von I derselben Zusammensetzung und Textur wie die der flachen Teile in Form von E gefüllt sind, wobei Spalte (ε) zwischen den flachen Teile in Form von E und den flachen Teilen (70, 71) in Form von I vorhanden sind.

5. Transformatorkern nach Anspruch 2, **dadurch gekennzeichnet, dass** er aus einem Unterkern (53) in Form von E und einem Unterkern (57) in Form von I gebildet ist, die einander gegenüber sind.

6. Transformatorkern nach Anspruch 2, **dadurch gekennzeichnet, dass** er aus zwei einander Unterkernen in Form von C (33, 34) gebildet ist, die einander gegenüber sind.

7. Transformatorkern nach Anspruch 2, **dadurch gekennzeichnet, dass** er aus zwei aneinandergrenzenden Sätzen von zwei Unterkernen (42, 43) in C gebildet ist, wobei die Sätze einander gegenüber sind.

8. Transformatorkern nach Anspruch 1 oder 2, **dadurch gekennzeichnet, dass** er aus einer Folge von Stapelschichten gebildet ist, wobei zwei aufeinanderfolgende Schichten Kopf an Kopf angeordnet und durch einen Spalt (δ2) getrennt sind.

9. Transformatorkern nach einem der Ansprüche 1 bis 8, **dadurch gekennzeichnet, dass** mindestens einer der Stapel aus mehreren flachen Teilen mit identischer Form besteht, die jeweils durch einen Spalt (δ1) getrennt sind.

10. Transformatorkern nach einem der Ansprüche 1 bis 9, **dadurch gekennzeichnet, dass** die Legierungselemente ausgewählt sind aus mindestens einem der Elemente Cr, Si, Al, Zr, Mo, W, V, Nb, Cu, Mn.

11. Transformatorkern nach einem der Ansprüche 1 bis 10, **dadurch gekennzeichnet, dass** die geschnittenen flachen Teile eine Symmetrie aufweisen.

12. Transformatorenkern nach einem der Ansprüche 1 bis 11, **dadurch gekennzeichnet, dass** die Korngröße der genannten Teile kleiner als oder gleich wie 200 µm ist.

13. Transformatorkern (49; 53) nach einem der Ansprüche 1 bis 12, **dadurch gekennzeichnet, dass** er auch zweite Stapel von flachen Teilen umfasst, die eine zweite Stärke (ep2) mit der gleichen Form wie die Stapel, die eine erste Stärke (ep1) aufweisen, aufweisen und diese überlagern, wobei die flachen Teile der zweiten Stapel aus mindestens einem Material sind, das eine Sättigungsmagnetisierung (Js) größer als oder gleich wie 2 T aufweist, wobei die zweiten Stapel weniger als 50 % des Volumens des Kerns darstellen.

14. Transformatorkern (49; 53) nach Anspruch 13, **dadurch gekennzeichnet, dass** die flachen Teile der zweiten Stapel aus mindestens einem Material hergestellt sind, das ausgewählt ist aus FeCo-Legierungen, FeCo(V, Ta, Cr, Si, X)-Legierungen, wobei X ausgewählt ist aus einem oder mehreren von Mo, Mn, Nb, Si, Al, FeCoSi-Legierungen, Weicheisen, Stählen, ferritischen Edelstählen, die in Gewichtsprozent 5-22 % Cr und insgesamt 0-10 % Mo, Mn, Nb, Si, Al, V enthalten, nicht orientierten FeSiAl-Elektrostählen.

15. Transformatorkern (49; 53) nach einem der Ansprüche 13 oder 14, **dadurch gekennzeichnet, dass** der Spalt (ε) zwischen zwei Stapeln oder Gruppen von Stapeln, die einander gegenüber sind, eine unterschiedliche Breite zwischen den ersten Stapeln mit einer ersten Stärke (ep1) und zwischen den zweiten Stapeln mit einer zweiten Stärke (ep2) aufweist.

16. Transformatorkern (49; 53) nach Anspruch 15, **dadurch gekennzeichnet, dass** der Spalt (ε) eine Breite (ε1) zwischen 2 und 1500 pm zwischen den Stapeln, die eine erste Stärke (ep1) aufweisen, und eine Breite (ε2) zwischen 2 und 3000 pm zwischen den Stapeln, die eine zweite Stärke (ep2) aufweisen, umfasst.

17. Ein- oder dreiphasiger elektrischer Transformator, umfassend einen Magnetkern vom Typ Schnitt-Stapel, **dadurch gekennzeichnet**, **dadurch gekennzeichnet, dass** der Magnetkern von dem Typ nach einem der Ansprüche 1 bis 16 ist.

18. Transformator nach Anspruch 17, **dadurch gekennzeichnet, dass** es sich um einen Transformator handelt, der dazu bestimmt ist, in ein Flugzeug eingebaut zu werden.

19. Transformator nach Anspruch 18, **dadurch gekennzeichnet, dass** es sich um einen Transformator handelt, der dazu bestimmt ist, im Cockpit eines Luftfahrzeugs platziert zu werden.

## Claims

1. Electric transformer core (49; 59) of the cut-and-stack type, **characterized in that** it comprises two stacks (53, 57; 60, 61) or groups of stacks (70, 71; 82, 84, 88, 89, 92, 93), each having a first thickness (ep1), the stacks (53, 57; 60, 61, 70, 71; 82, 84, 88, 89, 92, 93) each consisting of a single flat part or several identical flat parts isolated from each other, whose main cut directions are rectilinear and are either parallel or perpendicular to each other, the stacks (53, 57; 60, 61) or groups of stacks (70, 71; 82, 84, 88, 89, 92, 93) facing each other and having at least one residual or calibrated air gap (ε) with a maximum value of 10 mm between them, the flat parts being of at least one austenitic FeNi alloy containing Ni = 30-80% by weight %, preferably Ni = 40-60% by weight %, and at most 10% by weight %, preferably at most 2% by weight %, of alloying elements and impurities resulting from the preparation, the remainder being iron, the flat parts each having a crystallographic plane (100), the alloy having an acute cubic texture {100} <001>, of which at least 80% of the grains, preferably at least 95% of the grains, deviate by an angle (ω) equal to at most 20° with respect to the ideal orientation {100} <001>, the two main cutting directions of the flat pieces being substantially parallel to either the rolling direction (DL) or the transverse direction (DT) perpendicular to the rolling direction (DL), said crystallographic plane (100) deviating at most 20° from the rolling plane, preferably at most 10°, better at most 5°, and the axes [001] or [010] and respectively the rolling direction (DL) or the transverse direction (DT) deviating from an angle (α) at most equal to 20°, preferably at most equal to 10°, better not more than 5°, the flat parts having magnetic losses in sinusoidal induction waves of the magnetic core, for a maximum induction of 1 T, less than 20 W/kg at 400 Hz, preferably less than 15 W/kg, and better, less than 10 W/kg, the apparent magnetostriction for a maximum induction of 1.2 T (λₛ^{1.2T}) being less than 5 ppm, preferably less than 3 ppm, preferably 1 ppm, when the measurement is performed on an elongated rectangular sample, the field being applied in the direction of the long side of the sample and this direction being parallel to the lamination direction (DL), the apparent magnetostriction for a maximum induction of 1.2 T (λₛ^{1.2T}) being less than 5 ppm, preferably less than 3 ppm, preferably less than 1 ppm, when the measurement is made on an elongated rectangular sample, the field being applied in the direction of the long side of the sample and this direction being parallel to the transverse direction (DT) perpendicular to the rolling direction (DL) and located in the rolling plane, and the apparent magnetostriction for a maximum induction of 1.2 T (λₛ^{1.2T}) being less than 10 ppm, preferably less than 8 ppm, preferably less than 6 ppm, when the measurement is made on an elongated rectangular sample, the field being applied in the long direction of the sample and this direction being parallel to the intermediate direction at 45° of the rolling direction (DL) and the transverse direction (DT).

2. Transformer core according to claim 1, **characterized in that** the stacks (53, 57; 60, 61) are each C-shaped, E-shaped or I-shaped.

3. Transformer core according to claim 2, **characterized in that** it is formed by two E-shaped sub-cores (60, 61) facing each other.

4. Transformer core according to claim 2, **characterized in that** it is formed by a stack (21) of E-shaped flat parts placed head-to-tail, the empty spaces between the lateral branches (23, 24, 25) of the E-shaped flat parts being filled with I-shaped flat parts (70, 71) of the same composition and texture as those of the E-shaped flat parts, air gaps (ε) being present between the E-shaped flat parts and the I-shaped flat parts (70, 71).

5. Transformer core according to claim 2, **characterized in that** it is formed by an E-shaped sub-core (53) and an I-shaped sub-core (57) facing each other.

6. Transformer core according to claim 2, **characterized in that** it is formed by two C-shaped sub-cores (33, 34) facing each other.

7. Transformer core according to claim 2, **characterized in that** it is formed by two contiguous sets of two C-shaped sub-cores (42, 43) facing each other.

8. Transformer core according to claim 1 or 2, **characterized in that** it is formed by a succession of layers of stacks, two successive layers being placed head-to-tail and separated by an air gap (δ₂).

9. Transformer core according to one of the claims 1 to 8, **characterized in that** at least one of the stacks consists of several flat parts of identical shape each separated by an air gap (δ₁).

10. Transformer core according to one of the claims 1 to 9, **characterized in that** the alloying elements are chosen from among at least one of Cr, Si, Al, Zr, Mo, W, V, Nb, Cu, Mn.

11. Transformer core according to one of the claims 1 to 10, **characterized in that** the cut flat parts have a symmetry.

12. Transformer core according to one of claims 1 to 11, **characterized in that** the grain size of the parts is less than or equal to 200 µm.

13. Transformer core (49; 53) according to one of the claims 1 to 12, **characterized in that** it also comprises second stacks of flat parts, having a second thickness (ep2), of the same shape as the stacks having a first thickness (ep1) and superposed thereon, the flat parts of the second stacks being in at least one material having a saturation magnetization (Js) greater than or equal to 2 T, the second stacks representing less than 50% of the volume of the core.

14. Transformer core (49; 53) according to claim 13, **characterized in that** the flat parts of the second stacks are made of at least one material selected from FeCo alloys, FeCo(V, Ta, Cr, Si, X) alloys with X selected from one or more Mo, Mn, Nb, Si, Al, of FeCoSi alloys, soft iron, steels, ferritic stainless steels containing by weight % -22% Cr and 0 to 10% total of Mo, Mn, Nb, Si, Al, V, non-oriented FeSiAl electrical steels.

15. Transformer core (49; 53) according to one of the claims 13 or 14, **characterized in that** the air gap (ε) between two stacks or groups of stacks facing each other has a different width between the first stacks having a first thickness (ep1) and between the second stacks having a second thickness (ep2).

16. Transformer core (49; 53) according to claim 15, **characterized in that** the air gap (ε) has a width (ε₁) between 2 and 1500 µm between the stacks having a first thickness (ep1) and a width (ε2) between 2 and 3000 µm between the stacks having a second thickness (ep2).

17. Single-phase or three-phase electrical transformer comprising a cut-and-stack type magnetic core, **characterized in that** the magnetic core is of the type according to one of the claims 1 to 16.

18. Transformer according to claim 17, **characterized in that** it is a transformer intended to be on board an aircraft.

19. Transformer according to claim 18, **characterized in that** it is a transformer intended to be placed in the cockpit of an aircraft.
